# EUROPEAN PATENT APPLICATION

(11) **EP 4 742 809 A1**
(43) Date of publication of application: **13.05.2026**
(21) Application number: 24852153.6
(22) Date of filing: 29.07.2024
(51) Int. Cl.: H04W 74/04, H04W 74/0816, H04W 72/0446, H04B 7/26, H04W 84/12, H04L 5/00, H04W 72/50, H04L 5/22

(54) **METHOD AND APPARATUS FOR SHARING TXOP FOR C-TDMA OPERATION BY SWITCHING TXOP HOLDER IN MULTI-AP COMMUNICATION IN WIRELESS LAN SYSTEM**

(30) Priority: 07.08.2023 KR 20230103071; 11.08.2023 KR 20230105686; 08.09.2023 KR 20230119882; 25.09.2023 KR 20230128545
(71) Applicant: LG Electronics Inc., Yeongdeungpo-gu Seoul 07336 (KR)
(72) Inventor: KIM, Geonhwan, Seoul 06772 (KR); CHOI, Jinsoo, Seoul 06772 (KR); JANG, Insun, Seoul 06772 (KR); BAEK, Sunhee, Seoul 06772 (KR); YOON, Yelin, Seoul 06772 (KR); CHA, Dongju, Seoul 06772 (KR)
(74) Representative: Plasseraud IP
(86) International application number: PCT/KR2024/011009
(87) International publication number: WO 2025/033797

(57) **Abstract**

Proposed are a method and apparatus for sharing a TXOP for a C-TDMA operation by switching a TXOP holder in multi-AP communication in a wireless LAN system. Specifically, a first AP receives an MU-RTS trigger frame from a second AP. The first AP transmits a CTS frame to the second AP. The first AP receives or senses a CF-End frame from the second AP. The first AP exchanges a first frame with a first non-AP when an SIFS or PIFS has elapsed after the CF-End frame is transmitted.

## Description

### TECHNICAL FIELD

This specification relates to a technique for sharing a TXOP for C-TDMA operation by switching a TXOP holder in multi-AP communication in a wireless LAN system, and more specifically, to a method and device for switching the TXOP holder from SAP to DAP through a CF-End frame, thereby performing frame exchange with the DAP by a non-AP STA within a BSS of the DAP without being affected by a NAV of the SAP.

### BACKGROUND

Next-generation Wi-Fi (e.g., IEEE 802.1 The and/or later) aims to support ultra-high reliability when transmitting signals to STAs. To achieve this, various technologies are being considered to support high throughput, low latency, and extended range. For example, multiple APs can cooperate to perform TXOP sharing procedures.

### DISCLOSURE

### TECHNICAL PROBLEM

This specification proposes a method and device for sharing a TXOP for C-TDMA operation by switching a TXOP holder in multi-AP communication in a wireless LAN system.

### TECHNICAL SOLUTION

An example of this specification proposes a method for sharing a TXOP for C-TDMA operation by switching a TXOP holder in multi-AP communication.

This embodiment may be performed in a network environment that supports a next-generation wireless LAN system (Ultra High Reliability (UHR) wireless LAN system or next Wi-Fi). The next-generation wireless LAN system is an improved version of the 802.1 The system and can satisfy backward compatibility with the 802.1 The system.

The present embodiment is performed in a first AP, the first AP may be set as a shared AP (DAP) after negotiation in multi-AP communication, and the second AP may be set as a sharing AP (SAP) after negotiation in the multi-AP communication. First and second non-AP STAs of the present embodiment may correspond to at least one station (STA).

The present embodiment proposes a method for performing TXOP sharing by switching the TXOP holder when performing C-TDMA operation in multi-access point (multi-AP) communication (or multi-AP operation). In particular, the present embodiment proposes a method for performing frame exchange with the DAP without being affected by the NAV of the SAP by switching the TXOP holder from the SAP to the DAP through the CF-End frame. In addition, the present embodiment also proposes a method for utilizing the remaining TXOP by switching the TXOP holder from the DAP back to the SAP through the TXOP return sequence.

A first access point (AP) receives a Multi User-Request to Send (MU-RTS) transmission opportunity (TXOP) sharing (TXS) trigger frame from a second AP.

The first AP transmits a Clear to Send (CTS) frame to the second AP.

The first AP receives or detects a Contention Free (CF)-End frame from the second AP.

The first AP exchanges a first frame with a first non-AP station (STA) after SIFS (Short Inter Frame Space) or PIFS (PCF (Point Coordination Function) IFS) from a time the CF-End frame is transmitted.

At this time, the second AP is a Sharing AP that controls cooperation between multiple APs, and the first AP is a Shared AP that receives resources allocated or shared from the Sharing AP. The first non-AP STA is a non-AP STA within a Basic Service Set (BSS) of the first AP.

The technique for cooperation between the multiple APs may include a coordinated multi-AP technique such as Coordinated-Time Division Multiplexing Access (C-TDMA), Coordinated-Spatial Reuse (C-SR), Coordinated-beamforming (C-BF), or Coordinated-Orthogonal Frequency Division Multiple Access (C-OFMA).

In an example of C-TDMA operation, the entity sharing the TXOP (SAP, here the second AP) and the entity receiving the TXOP (DAP, here the first AP) are APs with different BSSs. That is, because frame transmission within the BSS of the SAP may cause non-AP STAs within the BSS of the DAP to set the basic NAV and not be able to exchange frames smoothly with the DAP, protection rules related to Network Allocation Vector (NAV) settings must be precisely applied to ensure smooth cooperation between APs and frame exchange within each BSS. In particular, non-AP STAs connected to the DAP can receive/detect frames transmitted from the SAP or non-AP STAs connected to the SAP and CTS frames transmitted from the DAP and set the basic NAV for the SAP. At this time, a problem may occur in which non-AP STAs connected to the DAP cannot transmit UL PPDUs or frames to the DAP due to the basic NAV.

This embodiment proposes a TXOP sharing method in a multi-AP cooperative environment, in which a TXOP holder is switched from a SAP to a DAP or back to a SAP and performs a C-TDMA procedure. Through the C-TDMA operation procedure proposed in this embodiment, a DAP and some non-AP STAs within the BSS of the DAP can exchange frames with the DAP without being affected by the NAV of the SAP. For example, when the associated non-AP STAs of the DAP receive a trigger frame to which a resource unit (RU) that enables transmission of a PPDU or frame is allocated from the DAP, the non-AP STAs can transmit the PPDU or frame without being affected by the NAV.

### ADVANTAGEOUS EFFECTS

This embodiment has the effect of enabling non-AP STAs connected to a DAP to seamlessly exchange frames with the DAP without setting a default NAV by the SAP by terminating some TXOPs and switching a TXOP holder according to a protected C-TDMA-based TXOP sharing method. This allows for appropriate scheduling based on cooperation between multiple APs, and can be expected to increase overall network throughput.

### BRIEF DESCRIPTION OF THE DRAWINGS

FIG. 1 shows an example of a transmitting apparatus and/or receiving apparatus of the present specification.
FIG. 2 is a conceptual view illustrating the structure of a wireless local area network (WLAN).
FIG. 3 illustrates a general link setup process.
FIG. 4 shows an example of a multi-link (ML).
FIG. 5 shows an example of a physical protocol data unit or physical layer (PHY) protocol data unit (PPDU) transmitted/received by an STA of the present disclosure.
FIG. 6 is a diagram illustrating the layout of resource units (RUs) used for a 20 MHz PPDU.
FIG. 7 is a diagram illustrating the layout of resource units (RUs) used for 40MHz PPDU.
FIG. 8 is a diagram illustrating the layout of resource units (RUs) used for an 80MHz PPDU.
FIG. 9 shows an operation related to UL-MU.
FIG. 10 illustrates an example of channels used/supported/defined within the 2.4 GHz band.
FIG. 11 illustrates an example of channels used/supported/defined within the 5 GHz band.
FIG. 12 illustrates an example of channels used/supported/defined within the 6 GHz band.
FIG. 13 illustrates an example of a modified transmission device and/or receiving device of the present specification.
FIG. 14 illustrates operation according to a conventional STX operation.
FIG. 15 illustrates an example of Coordinated OFDMA (C-OFDMA).
FIG. 16 illustrates an example of Coordinated Beamforming (CBF).
FIG. 17 illustrates an example of AP selection.
FIG. 18 illustrates an example of JTX/JT.
FIG. 19 illustrates an example of the operation of an MU-RTS TXS trigger frame in which the TXOP Sharing Mode subfield value is 2.
FIG. 20 illustrates an example of coordinated TDMA operation.
FIG. 21 illustrates an example of a procedure for TXOP sharing method 1 based on TXOP holder switching based on incremental TXOP hold.
FIG. 22 illustrates an example of a procedure for TXOP sharing method 2 based on TXOP holder switching based on incremental TXOP hold.
FIG. 23 illustrates an example of a procedure for TXOP sharing method 1 based on TXOP truncation.
FIG. 24 illustrates an example of a procedure for TXOP sharing method 2 based on TXOP truncation.
FIG. 25 illustrates an example of a TXOP holder return procedure using a CF-End frame.
FIG. 26 illustrates an example of a TXOP holder return procedure using MU-RTS TXS TF and CTS exchange.
FIG. 27 is a flowchart illustrating the operation of a transmitting device according to the present embodiment.
FIG. 28 is a flowchart illustrating the operation of a receiving device according to the present embodiment.
FIG. 29 is a flowchart illustrating a procedure for a TXOP sharing method using TXOP truncation on the Sharing AP side according to the present embodiment.
FIG. 30 is a flowchart illustrating a procedure for a TXOP sharing method using TXOP truncation on the Shared AP side according to the present embodiment.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

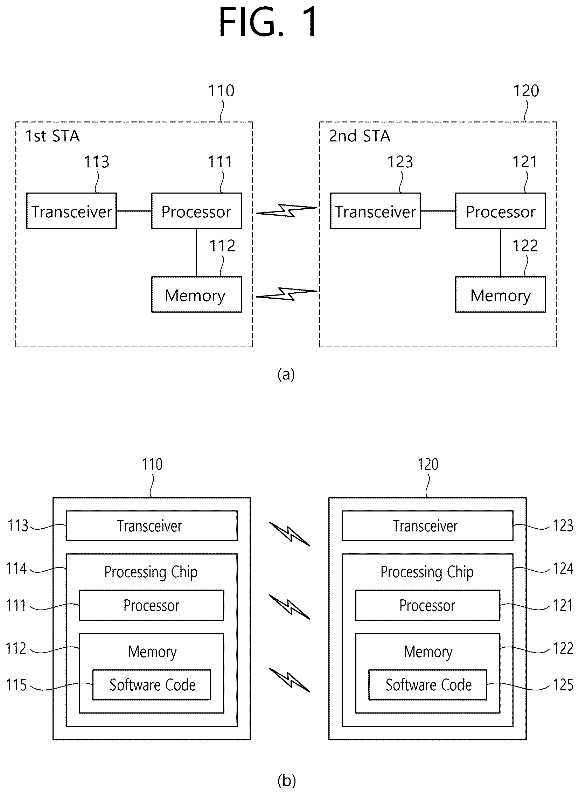

FIG. 1 shows an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGONTM series of processors made by Qualcomm^{®}, EXYNOSTM series of processors made by Samsung^{®}, A series of processors made by Apple^{®}, HELIOTM series of processors made by MediaTek^{®}, ATOMTM series of processors made by Intel^{®} or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

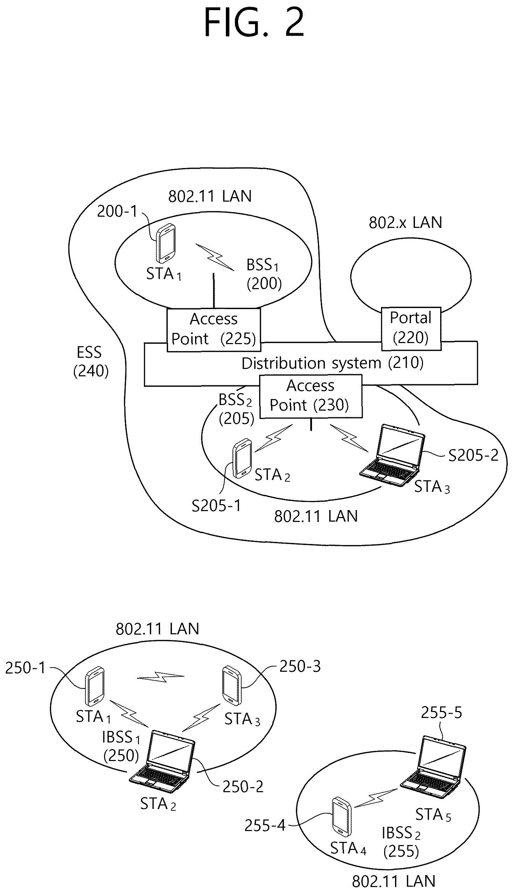

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, an AP 225, 230 providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

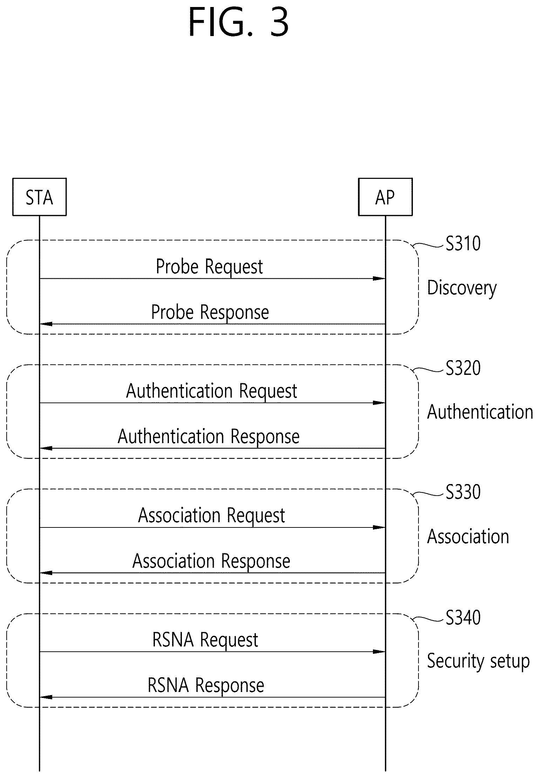

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

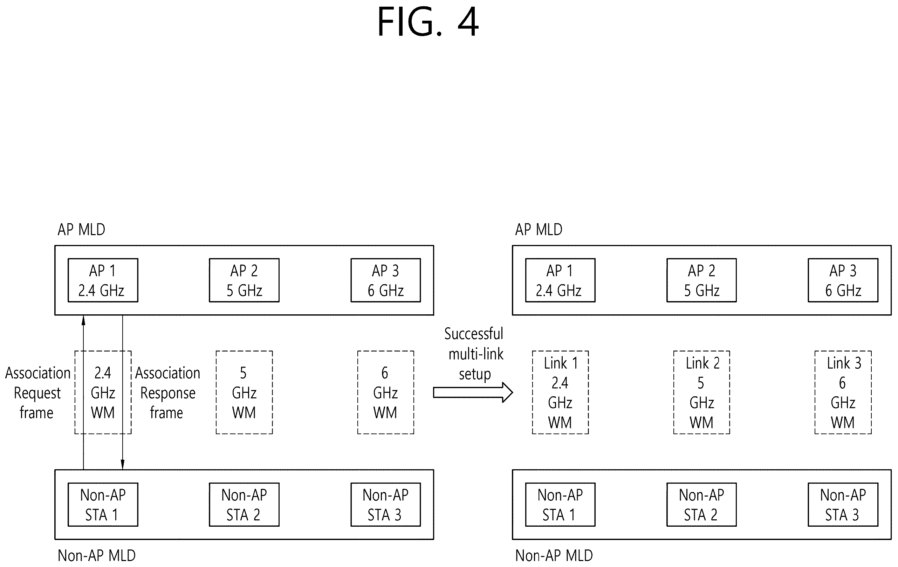

FIG. 4 shows an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

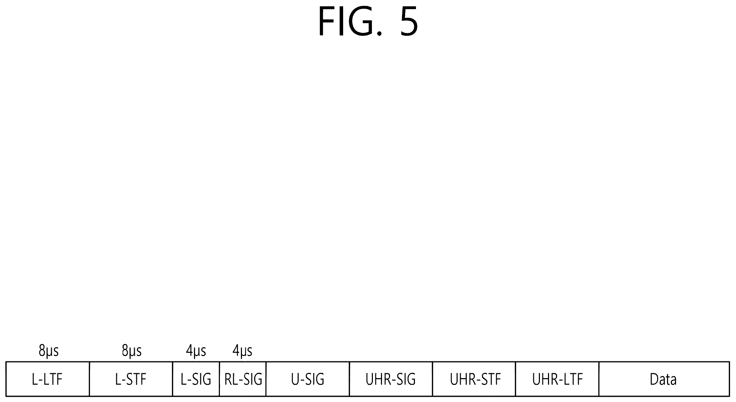

FIG. 5 shows an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 5. The PPDU described in the present disclosure can have, for example, a structure of FIG. 5. In addition, the PPDU described in the present disclosure can be called by various names such as a transmission PPDU, a reception PPDU, a first type or an N^{th} type PPDU, etc. The PPDU described in the present disclosure can be used in a WLAN system defined according to IEEE 802.11bn and/or a next-generation WLAN system that improves IEEE 802.11bn.

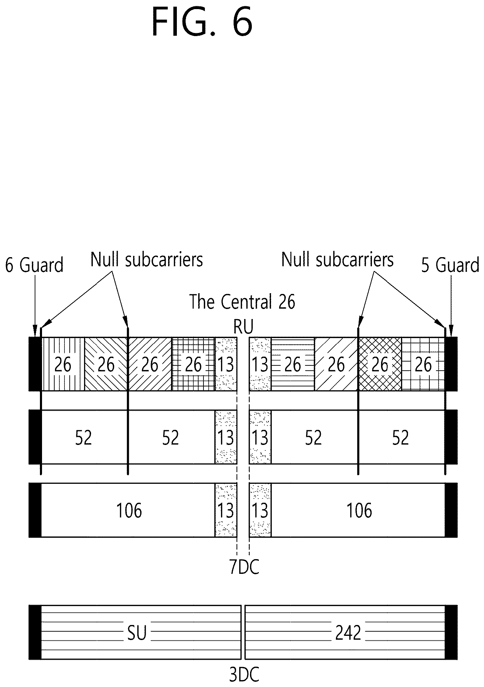

The PPDU of FIG. 5 can be related to various PPDU types used in a UHR system. For example, the example of FIG. 5 can be used for at least one of single-user (SU) mode/type/transmission, multi-user (MU) mode/type/transmission, and null-data packet (NDP) mode/type/transmission related to channel sounding. For example, if the example of FIG. 5 is related to NDP, the data field illustrated can be omitted. If the PPDU of FIG. 5 is used for trigger-based (TB) mode, UHR-SIG of FIG. 6 can be omitted. In other words, an STA that has received a trigger frame for uplink-MU (UL-MU) communication can transmit a PPDU with UHR-SIG omitted in the example of FIG. 5.

In FIG. 5, L-STF or UHR-LTF may be called a preamble or a physical preamble, and may be generated/transmitted/received/acquired/decoded in the physical layer (included in the transmitting/receiving STA).

Each block illustrated in FIG. 5 may be called a field/subfield/signal, etc. The names of these fields/subfields/signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 5.

A subcarrier spacing of the L-STF, L-LTF, L-SIG, RL-SIG, U-SIG, and UHR-SIG fields of FIG. 5 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 5, the L-LTF and the L-STF may be the same as those in the conventional fields (for example, non-HT LTF and non-HT STF defined in conventional WLAN standards).

The L-SIG field of FIG. 5 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index {-28, -27, +27, +28}. The aforementioned signal may be used for channel estimation in the frequency domain corresponding to {-28, -27, +27, +28}.

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 6. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (Co-BF), spatial reuse (SR), type related to coordinated OFDMA (C-OFDMA), type related to coordinated TDMA (Co-TDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to an modulation and coding scheme (MCS) applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 5. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 5 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 5 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

FIG. 6 is a diagram illustrating the layout of resource units (RUs) used for a 20 MHz PPDU. That is, the UHR-LTF, UHR-STF, and/or data fields included in the 20 MHz PPDU may be transmitted/received through at least one of the various RUs defined in FIG. 6.

As illustrated in the uppermost part of FIG. 6, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

Meanwhile, the layout of the RUs in FIG. 6 may be used not only for a multiple users (MUs) but also for a single user (SU), in which case one 242-unit may be used and three DC tones may be inserted as illustrated in the lowermost part of FIG. 6.

Although FIG. 6 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In this specification, N-RU may be represented as N-tone RU, etc. For example, 26-RU may be represented as 26-tone RU.

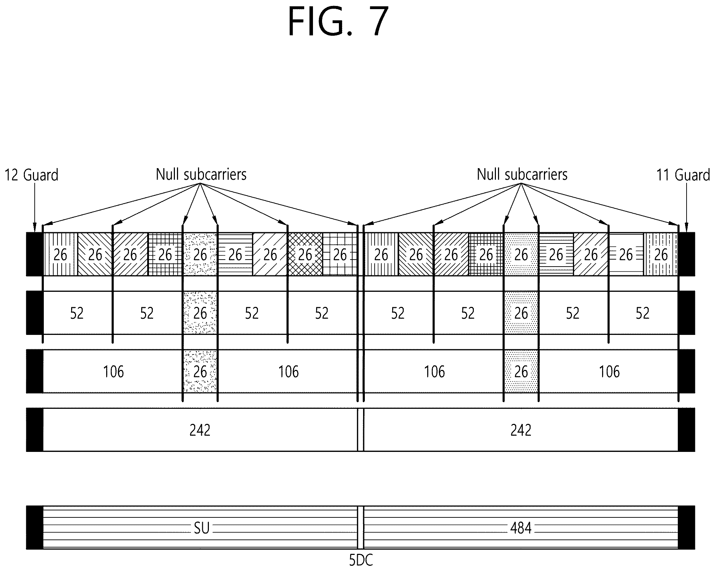

FIG. 7 is a diagram illustrating the layout of resource units (RUs) used for 40MHz PPDU.

Similarly to FIG. 6 in which RUs having various sizes are used, a 26-RU, a 52-RU, a 106-RU, a 242-RU, a 484-RU, and the like may be used in an example of FIG. 7. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 7, when the layout of the RUs is used for a single user, a 484-RU may be used. The specific number of RUs may be changed similarly to FIG. 6.

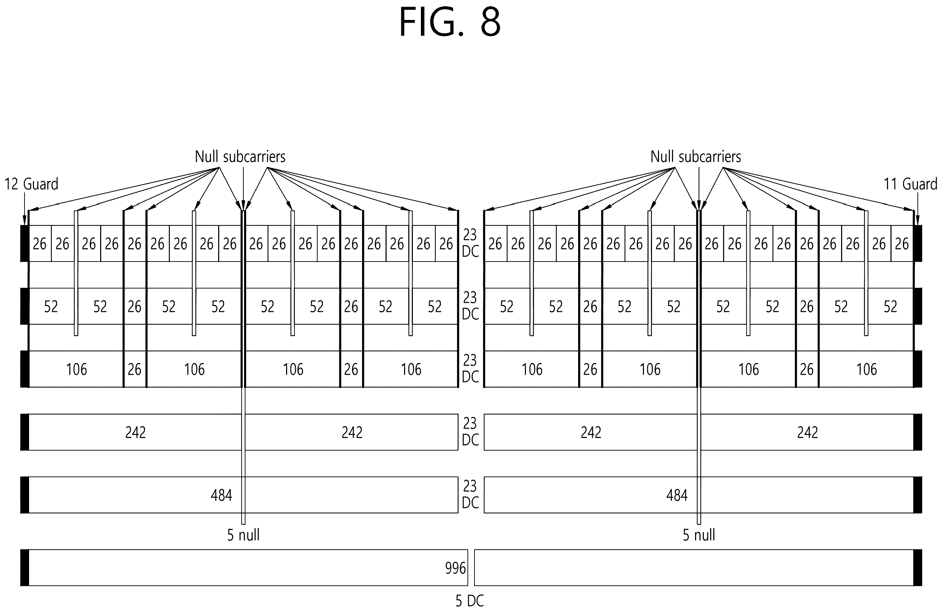

FIG. 8 is a diagram illustrating the layout of resource units (RUs) used for an 80MHz PPDU. The layout of resource units (RUs) used in this specification may vary. For example, the layout of resource units (RUs) used in the 80MHz band may vary.

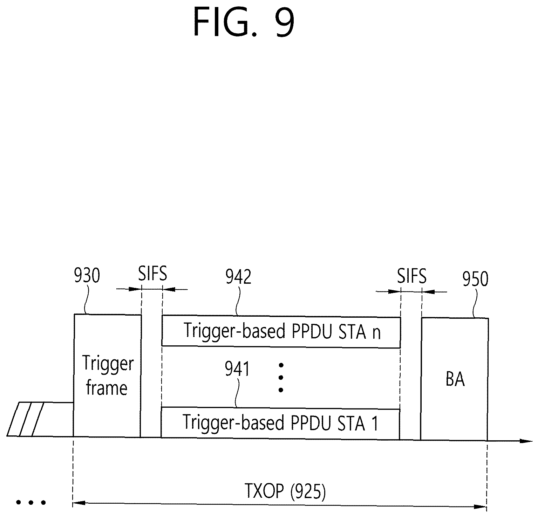

FIG. 9 shows an operation related to UL-MU. As illustrated, a transmitting STA (e.g., AP) can perform channel access through contending (i.e., backoff operation) and transmit a trigger frame (930). That is, the transmitting STA (e.g., AP) can transmit a PPDU including a trigger frame (930). When a PPDU including a trigger frame is received, a TB (trigger-based) PPDU is transmitted after a delay of SIFS.

TB PPDUs (941, 942) are transmitted at the same time and can be transmitted from multiple STAs (e.g., User STAs) whose AIDs are indicated in the Trigger frame (930). The ACK frame (950) for the TB PPDU can be implemented in various forms.

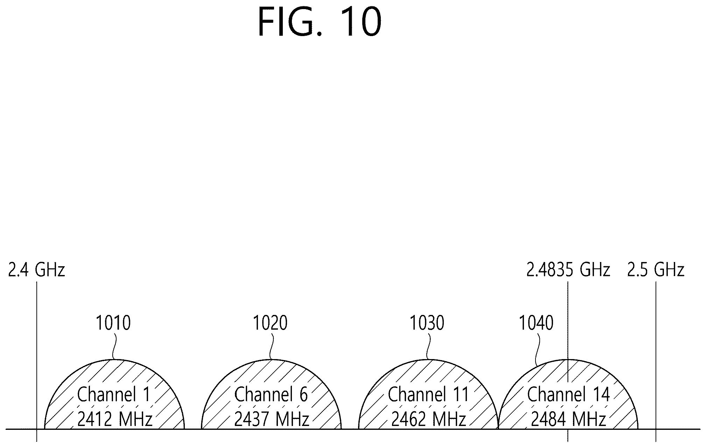

FIG. 10 illustrates an example of channels used/supported/defined within the 2.4 GHz band.

The 2.4 GHz band may also be referred to by other names, such as "first band." Furthermore, the 2.4 GHz band may refer to a frequency range in which channels with center frequencies adjacent to 2.4 GHz (e.g., channels with center frequencies between 2.4 and 2.5 GHz) are used/supported/defined.

The 2.4 GHz band may include multiple 20 MHz channels. The 20 MHz within the 2.4 GHz band may have multiple channel indices (e.g., indices 1 through 14). For example, the center frequency of a 20 MHz channel assigned channel index 1 may be 2.412 GHz, the center frequency of a 20 MHz channel assigned channel index 2 may be 2.417 GHz, and the center frequency of a 20 MHz channel assigned channel index N may be (2.407 + 0.005*N) GHz. The channel indices may be referred to by various names, such as channel numbers. The specific numerical values of the channel indices and center frequencies may change.

FIG. 10 exemplarily illustrates four channels within the 2.4 GHz band. The illustrated first frequency region (1010) to fourth frequency region (1040) may each include one channel. For example, the first frequency region (1010) may include channel 1 (a 20 MHz channel having an index of 1). In this case, the center frequency of channel 1 may be set to 2412 MHz. The second frequency region (1020) may include channel 6. In this case, the center frequency of channel 6 may be set to 2437 MHz. The third frequency region (1030) may include channel 11. In this case, the center frequency of channel 11 may be set to 2462 MHz. The fourth frequency region (1040) may include channel 14. In this case, the center frequency of channel 14 may be set to 2484 MHz.

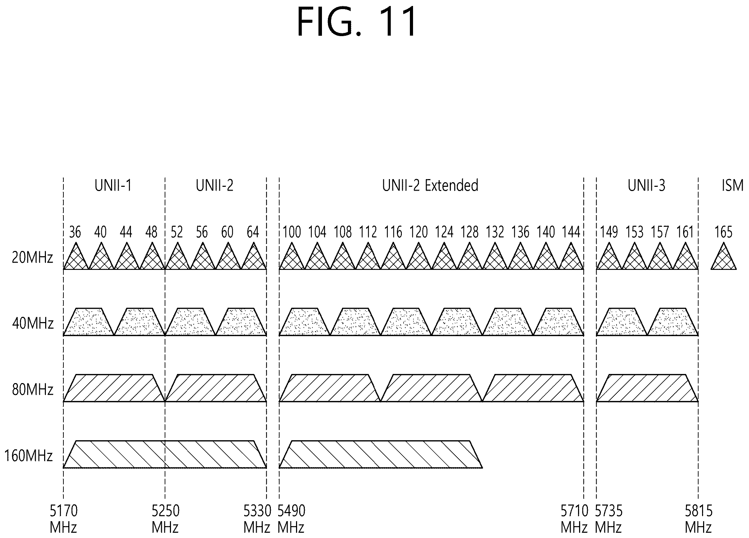

FIG. 11 illustrates an example of channels used/supported/defined within the 5 GHz band.

The 5 GHz band may be referred to by other names, such as a second band/band, etc. The 5 GHz band may refer to a frequency range in which channels with center frequencies greater than or equal to 5 GHz and less than 6 GHz (or less than 5.9 GHz) are used/supported/defined. Alternatively, the 5 GHz band may include multiple channels between 4.5 GHz and 5.5 GHz. The specific figures shown in FIG. 11 are subject to change.

Multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Within the 5 GHz band, multiple channels can be configured, and the bandwidth of each channel can be variously configured, such as 20 MHz, 40 MHz, 80 MHz, or 160 MHz. For example, the 5170 MHz to 5330 MHz frequency domain/range within UNII-1 and UNII-2 can be divided into eight 20 MHz channels. The 5170 MHz to 5330 MHz frequency domain/range can be divided into four channels through a 40 MHz frequency domain. The 5170 MHz to 5330 MHz frequency domain/range can be divided into two channels through an 80 MHz frequency domain. Alternatively, the 5170 MHz to 5330 MHz frequency domain/range can be divided into one channel through a 160 MHz frequency domain.

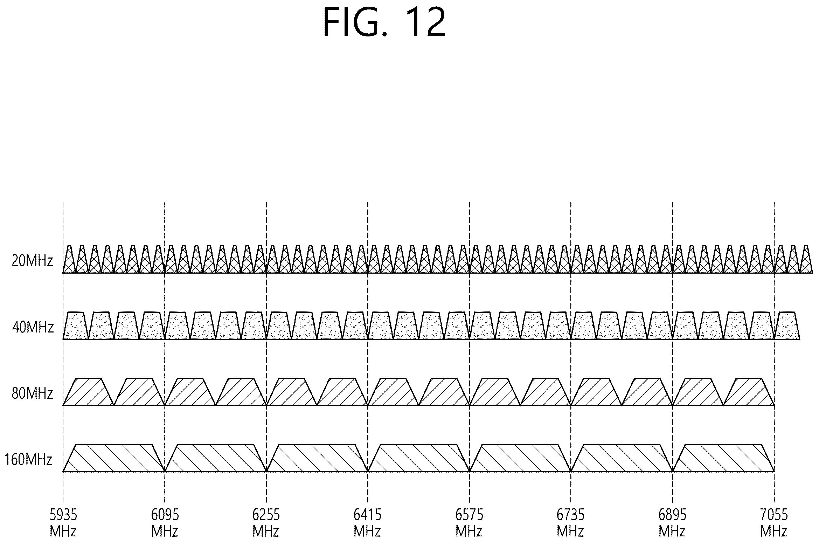

FIG. 12 illustrates an example of channels used/supported/defined within the 6 GHz band.

The 6 GHz band may be referred to by other names, such as the third band/band. The 6 GHz band may refer to a frequency range where channels with center frequencies higher than 5.9 GHz are used, supported, and defined. The specific values shown in FIG. 12 are subject to change.

For example, the 20 MHz channel in FIG. 12 may be defined starting from 5.940 GHz. Specifically, the leftmost channel among the 20 MHz channels in FIG. 12 may have an index of 1 (or channel index, channel number, etc.) and be assigned a center frequency of 5.945 GHz. In other words, the center frequency of channel index N may be determined as (5.940 + 0.005*N) GHz.

Accordingly, the indexes (or channel numbers) of the 20 MHz channels of FIG. 12 may be 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, 197, 201, 205, 209, 213, 217, 221, 225, 229, 233. Also, according to the (5.940 + 0.005*N) GHz rule mentioned above, the indexes of the 40 MHz channels in FIG. 12 may be 3, 11, 19, 27, 35, 43, 51, 59, 67, 75, 83, 91, 99, 107, 115, 123, 131, 139, 147, 155, 163, 171, 179, 187, 195, 203, 211, 219, 227.

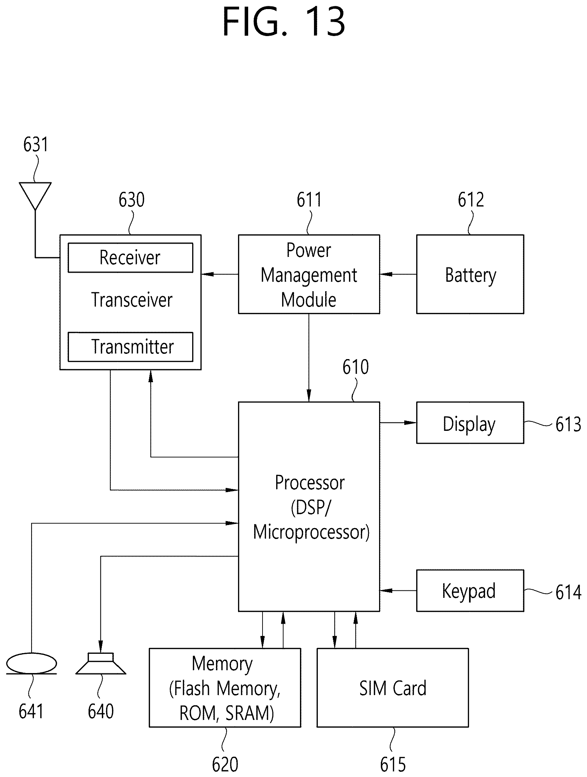

FIG. 13 shows a modified example of a transmitting device and/or a receiving device of the present disclosure.

The devices (e.g., AP STA, non-AP STA) shown in FIGS. 1 to 4 can be modified as shown in FIG. 13. The transceiver 630 of FIG. 13 can be identical to the transceiver 113, 123 of FIG. 1. The transceiver 630 of FIG. 13 can include a receiver and a transmitter.

The processor 610 of FIG. 13 can be identical to the processor 111, 121 of FIG. 1. Alternatively, the processor 610 of FIG. 13 can be identical to the processing chip 114, 124 of FIG. 1.

The memory 150 of FIG. 13 may be the same as the memory 112, 122 of FIG. 1. Alternatively, the memory 150 of FIG. 13 may be a separate external memory different from the memory 112, 122 of FIG. 1.

Referring to FIG. 13, the power management module 611 manages power for the processor 610 and/or the transceiver 630. The battery 612 supplies power to the power management module 611. The display 613 outputs the result processed by the processor 610. The keypad 614 receives input to be used by the processor 610. The keypad 614 may be displayed on the display 613. The SIM card 615 may be an integrated circuit used to securely store an international mobile subscriber identity (IMSI) and its associated keys, which are used to identify and authenticate subscribers in mobile devices such as mobile phones and computers.

Referring to FIG. 13, the speaker (640) may output sound-related results processed by the processor 610. The microphone (641) may receive sound-related input to be used by the processor 610.

Below, the Multi-AP operation applied to this specification is described.

The Multi-AP operation refers to a communication technique involving multiple APs in a WLAN. For example, the Multi-AP operation may refer to an operation in which one or more APs transmit and receive information to one or more STAs. In contrast to the Multi-AP operation, existing techniques may be expressed using various terms, such as STX (Single Transmission). For example, the STX operation may refer to a method in which one BSS AP communicates with one BSS STA. When communication is performed based on the STX operation, interference with adjacent APs (e.g., APs located in an overlapping BSS) may occur. This interference may result in reduced transmission and reception performance for cell-edge users (e.g., non-AP STAs located at the edge of the BSS).

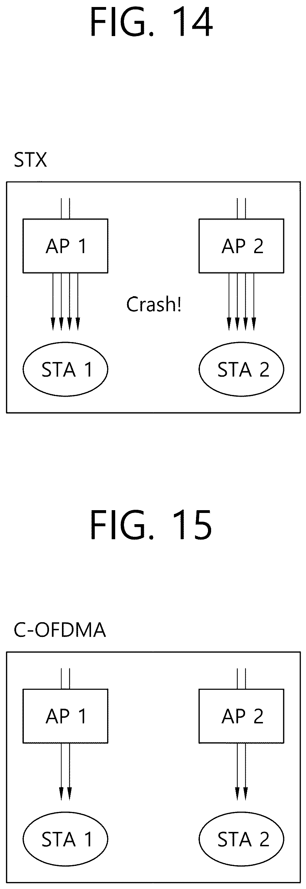

FIG. 14 illustrates operation according to a conventional STX operation. As shown, adjacent AP1 and AP2 can cause interference between STAs and APs.

To improve the STX operation, a new multi-AP operation is proposed. This multi-AP operation can be based on a technology that reduces various interferences, such as inter-symbol interference (ISI), through coordination with neighboring APs (e.g., APs located in an overlapping BSS).

In FIG. 14, STA1 and AP1 may be included in a BSS, and STA2 and AP2 may be included in an OBSS (Overlapping Basic Service Set). That is, STA2 may be an unassociated STA to AP1, and STA1 may be an unassociated STA to AP2.

For example, the Multi-AP operation can be classified into various technologies/types/formats/protocols, etc. For example, the Multi-AP operation can include Coordinated TDMA (C-TDMA) that distinguishes wireless resources allocated to multiple APs based on a time axis (time domain). Additionally or alternatively, the Multi-AP operation can include Coordinated OFDMA (C-OFDMA) that distinguishes wireless resources allocated to multiple APs based on a frequency axis (time domain). Additionally or alternatively, the Multi-AP operation can include Coordinated Spatial Reuse (C-SR) that applies Spatial Reuse (SR) to at least one AP. Additionally or alternatively, the Multi-AP operation can include Coordinated beamforming (CBF)/nulling that nulls and transmits interference generated from neighbors (e.g., adjacent APs/STAs, and/or OBSS APs/OBSS STAs). Additionally or alternatively, the Multi-AP operation may includeAP selection in which an AP with a good channel condition among neighboring APs (e.g., at least one AP located within a BSS or OBSS and with a good channel condition) transmits. Additionally or alternatively, the Multi-AP operation may include Joint Transmission (JTX) or JT in which multiple APs (e.g., multiple APs included in the same BSS/OBSS, or multiple APs included in different BSS/OBSS) cooperate to perform simultaneous transmission and reception, and JTX/JT may be implemented based on Joint Beamforming or Joint MU-MIMO.

FIG. 15 illustrates an example of Coordinated OFDMA (C-OFDMA). The illustrated AP1 can transmit a PPDU/signal to STA1, and AP2 can transmit a PPDU/signal to STA2. The transmission from AP1 and the transmission from AP2 can be performed in the same/overlapping time interval. The transmission from AP1 to STA1 can be performed based on a first frequency band, and the transmission from AP2 to STA2 can be performed based on a second frequency band different from the second frequency band. For example, in FIG. 15, STA1 and AP1 can be included in a BSS, and STA2 and AP2 can be included in an OBSS. That is, STA2 can be an unassociated STA to AP1, and STA1 can be an unassociated STA to AP2.

Although not illustrated in FIG. 15, an example of Coordinated TDMA (C-TDMA) is also possible. For example, the acquired TXOP can be divided into specific time units (e.g., slots), and the divided slots can be sequentially assigned to multiple different APs.

The above-described C-OFDMA example can be further modified as follows. For example, an AP (e.g., AP1) that has acquired a TXOP can share frequency resources with at least one neighboring AP (e.g., AP2 in the BSS/OBSS). For example, shared frequency resources can be defined on a resource unit (RU) basis or a subchannel basis. For example, for flexibility, frequency resources can be shared from AP1 to AP2 in 20/40/80 MHz subchannels or 242/484/996-tone RU units.

AP1, performing C-OFDMA, can act as a sharing AP or a master AP. That is, AP1 can request at least one neighboring AP (e.g., AP2 in the BSS/OBSS) to report information about the channel and/or buffer status. Based on this, AP1 can obtain a TXOP and share a part of the frequency resource (e.g., a 20 MHz subchannel or a RU of a certain size) with at least one AP in the vicinity (e.g., AP2 existing in the BSS/OBSS) within all or part of the time interval related to the TXOP.

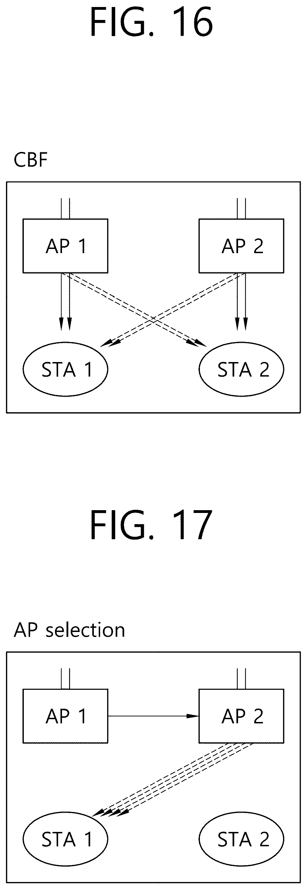

FIG. 16 illustrates an example of Coordinated Beamforming (CBF). The illustrated AP1 may transmit a PPDU/signal to STA1, and AP2 may transmit a PPDU/signal to STA2. The transmission from AP1 and the transmission from AP2 may be performed in the same/overlapping time interval. The transmission from AP1 and the transmission from AP2 may be performed through the same/overlapping frequency band. In order to reduce interference caused to STA2 by AP1, AP1 may perform nulling/beamforming toward STA2, and in order to reduce interference caused to STA1 by AP2, AP2 may perform nulling/beamforming toward STA1. For example, such nulling/beamforming may be implemented in a manner of positioning a radiation null to a neighboring unassociated STA. The above-described nulling/beamforming may make a specific AP invisible to a neighboring unassociated STA. For example, the above-described nulling/beamforming may make AP1 (or AP2) invisible to STA2 (or STA1).

For example, in FIG. 16, STA1 and AP1 may be included in the BSS, while STA2 and AP2 may be included in the OBSS. In other words, STA2 may be an unassociated STA to AP1, and STA1 may be an unassociated STA to AP2.

Although not illustrated in FIG. 16, control signals (e.g., coordination frames) for nulling/beamforming between AP1 and STA2 and/or nulling/beamforming between AP2 and STA1 may be transmitted and received over the backhaul link between AP1 and AP2.

FIG. 17 illustrates an example of AP selection. The illustrated AP2 is judged to have a better channel condition than AP1. AP1 transmits its data/signal to AP2 via a backhaul link, andAP2 can transmit a signal to STA1 instead of AP1. For example, in FIG. 17, STA1 and AP1 may be included in a BSS, and STA2 and AP2 may be included in an OBSS. In other words, STA2 may be an unassociated STA to AP1, and STA1 may be an unassociated STA to AP2.

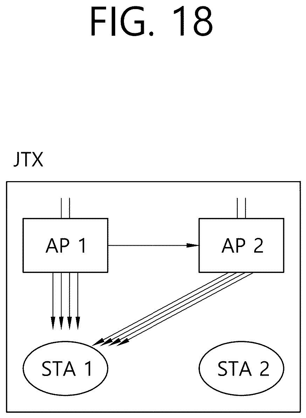

FIG. 18 illustrates an example of JTX/JT. The illustrated AP1 can transmit to STA1 together with AP2. For example, the PPDU/signal transmitted from AP2 to STA1 may be all or part of the same as the PPDU/signal transmitted from AP1 to STA1. For example, the PPDU/signal transmitted from AP2 to STA1 may be simultaneously transmitted through the same/overlapping frequency band as the PPDU/signal transmitted from AP1 to STA1. For example, the PPDU/signal transmitted from AP2 to STA1 may be a signal transmitted from AP1 through a backhaul link. For example, in FIG. 18, STA1 and AP1 may be included in a BSS, and STA2 and AP2 may be included in an OBSS. That is, STA2 may be an unassociated STA to AP1, and STA1 may be an unassociated STA to AP2.

More specifically, in FIG. 18, AP1 can transmit a coordination request (or can be named variously, such as a first request, a control request, etc.) to AP2 and receive a coordination response (or can be named variously, such as a first response, a control response, etc.) from AP2. Through the exchange of the request/response, information about coordination between AP1 and AP2 (e.g., information about whether AP1 and AP2 will perform simultaneous transmission to STA1), information about the point in time when coordination starts, information about the point in time when AP1 and AP2 start simultaneous transmission to STA1, information about data shared between AP1 and AP2, etc. can be exchanged. AP1 can share its data with AP2 via the backhaul link. Thereafter, AP1 can transmit a coordination trigger frame (or can be named variously, such as a trigger frame) to AP2 and perform simultaneous transmission to STA1 based on the trigger frame.

### <Embodiments applicable to this specification>

To enable terminals to maintain continuous WLAN connectivity over a wider area, numerous APs are being installed adjacent to each other. However, overlapping BSSs of multiple APs can lead to issues such as radio interference and transmission collisions between APs. To address these issues, various technologies have been proposed to coordinate APs across frequency, time, and spatial domains (e.g., RU selection, joint transmission, nulling, etc.). Furthermore, attention should be paid to the various issues that may arise during inter-AP coordination.

In EHT (802.11be), a technology was proposed to allocate some time within the TXOP acquired by the AP to support peer-to-peer (P2P) transmission to non-AP STAs. To this end, a new TXOP Sharing Mode subfield was defined in the Common Info field of the existing MU-RTS Trigger frame, and the MU-RTS (Multi User-Request To Send) Trigger frame when this value is nonzero is referred to as an MU-RTS TXOP Sharing (TXS) Trigger frame (TF). If the value of the TXOP Sharing mode is 1, the non-AP STA supports one or more (non-TB) PPDU transmissions to the AP, and if the value of the TXOP Sharing mode is 2, the non-AP STA supports P2P transmission in addition to (non-TB) PPDU transmissions to the AP.

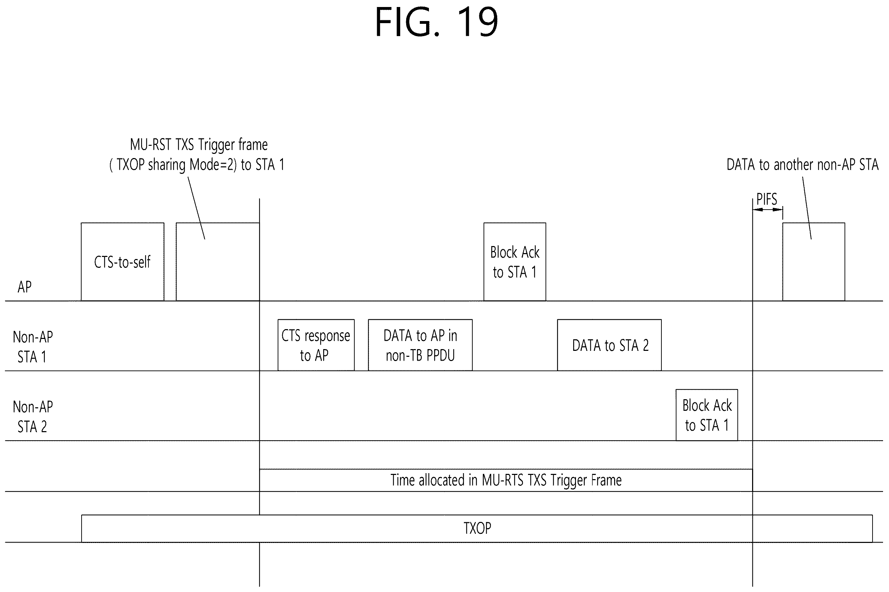

FIG. 19 illustrates an example of the operation of an MU-RTS TXS trigger frame in which the TXOP Sharing Mode subfield value is 2.

FIG. 19 shows an example of operation when the TXOP Sharing mode value is 2. When the AP transmits an MU-RTS TXS TF including time allocation information (Time allocated in MU-RTS TXS Trigger Frame of FIG. 19) to non-AP STA 1, non-AP STA 1 can perform P2P transmission to non-AP STA 2 after responding with Clear-To-Send (CTS).

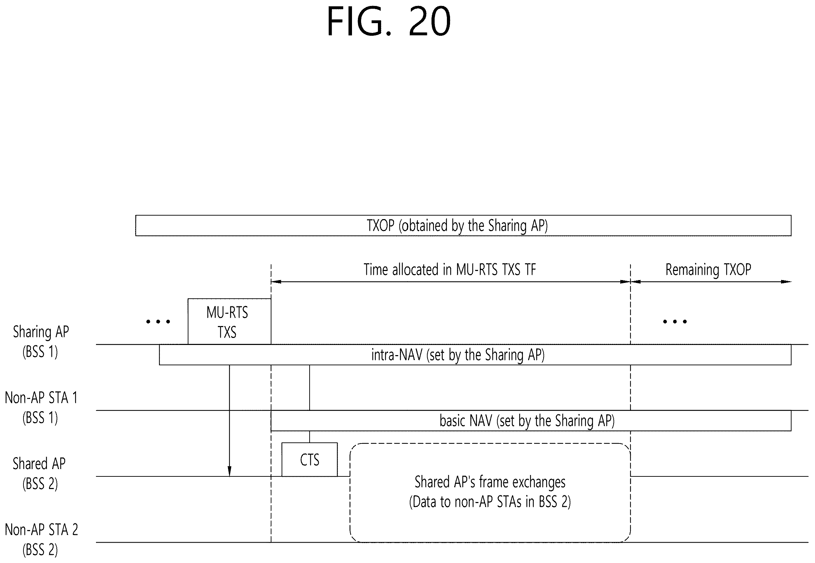

FIG. 20 illustrates an example of coordinated TDMA operation.

Meanwhile, if the existing Triggered TXOP Sharing protocol is utilized for multi-AP coordination, frame exchange can be performed without affecting each other by dividing the transmission within the BSS of each cooperative AP by time unit. That is, FIG. 20 shows an example of Coordinated-Time Division Multiplexing Access (Co-TDMA) according to the time unit among the coordination methods between cooperative APs. At this time, the AP in the existing Triggered TXS protocol can play the role of an AP that shares TXOP in the multi-AP coordination operation, and the STA in the existing Triggered TXS protocol can play the role of an AP that shares TXOP in the multi-AP coordination operation. In this specification, an AP that shares TXOP is referred to as a Sharing AP (SAP), and an AP that receives TXOP from an SAP is referred to as a Shared AP (DAP). Here, the SAP that shares TXOP is not limited to only AP STAs, and may also include non-AP STAs that share TXOP. In addition, the DAP that shares TXOP is not limited to only AP STAs, and may also include non-AP STAs that share TXOP (or transmit and receive with AP STAs that share TXOP). In addition, the frame exchange with non-AP STAs or SAPs belonging to the DAP BSS during the time allocated to the DAP is referred to as the BSS frame exchange (FE) of the DAP. For example, the frame exchange may include data frame transmission and block ACK frame response following RTS/CTS frame exchange between the DAP and non-AP STAs, UL data frame transmission by non-AP STAs in response to a trigger frame transmitted from the DAP, or data frame transmission by the DAP in response to a trigger frame transmitted from the SAP.

### 1. A method for perform the C-TDMA procedure in which TXOP sharing is performed by switching the TXOP holder

### 1) Problem

In the existing Triggered TXS protocol, since an AP shares its acquired TXOP with non-AP STAs within the same BSS, the entity receiving the TXOP (i.e., non-AP STA) is protected from the NAV (Network Allocation Vector) of the entity sharing the TXOP (i.e., the AP). Specifically, STAs within the AP's BSS receive/detect frames transmitted from the AP and establish an intra-BSS NAV, while STAs outside the AP's BSS establish a basic NAV. In contrast, in the example C-TDMA operation presented in FIG. 20, the entity sharing the TXOP (i.e., SAP) and the entity receiving the TXOP (i.e., DAP) are APs within different BSSs. That is, since the STAs within the BSS of the DAP may not be able to set the basic NAV and perform smooth FE (Frame Exchange) with the DAP due to the frame transmission within the BSS of the SAP, the protection rules related to NAV setting must be precisely applied for smooth cooperation between APs and FE within each BSS. In particular, the non-AP STAs connected to the DAP can receive/detect the frames transmitted from the SAP or the non-AP STAs connected to the SAP and the CTS frame transmitted from the DAP to set the basic NAV for the SAP. However, this may cause a problem in that the non-AP STAs (connected to the DAP) cannot transmit UL PPDU/frame to the DAP.

Therefore, this specification proposes a TXOP sharing method in which a TXOP holder is switched from SAP to DAP or back to SAP in a multi-AP cooperative environment and performs a C-TDMA procedure.

The C-TDMA operating procedure proposed in this specification allows a DAP and some non-AP STAs within the DAP's BSS to exchange frames with the DAP without being affected by the SAP's NAV. For example, if the associated STAs of a DAP receive a Trigger frame from the DAP that allocates resources (e.g., Resource Units (RUs)) that enable them to transmit PPDUs/frames, they can transmit PPDUs/frames without being affected by the NAV. The specific designations (names) proposed in this specification are subject to change and are not limited.

This specification describes how TXOP sharing and C-TDMA operations occur when an entity sharing a TXOP (i.e., SAP) passes a TXOP holder to an entity receiving the TXOP (i.e., DAP).

The TXOP sharing procedure in C-TDMA according to the present disclosure means that FE can be performed without interference between each other during the TXOP period acquired by the SAP or shared by the DAP from the SAP. For example, an AP that acquires a TXOP and acts as a SAP can perform TXOP sharing in which the DAP becomes the TXOP holder so that the DAP and non-AP STAs connected to the DAP do not set NAVs through FEs individually performed within its BSS. In addition, the DAP that has become the TXOP holder can support the SAP that shared the TXOP to become the TXOP holder again when the time allocated to the DAP expires.

The C-TDMA procedure proposed in this specification for switching TXOP holders and performing TXOP sharing can be defined and operated as follows.

### 2) TXOP sharing procedure by SAP

### Option 1-1) TXOP sharing method 1 using incremental TXOP hold

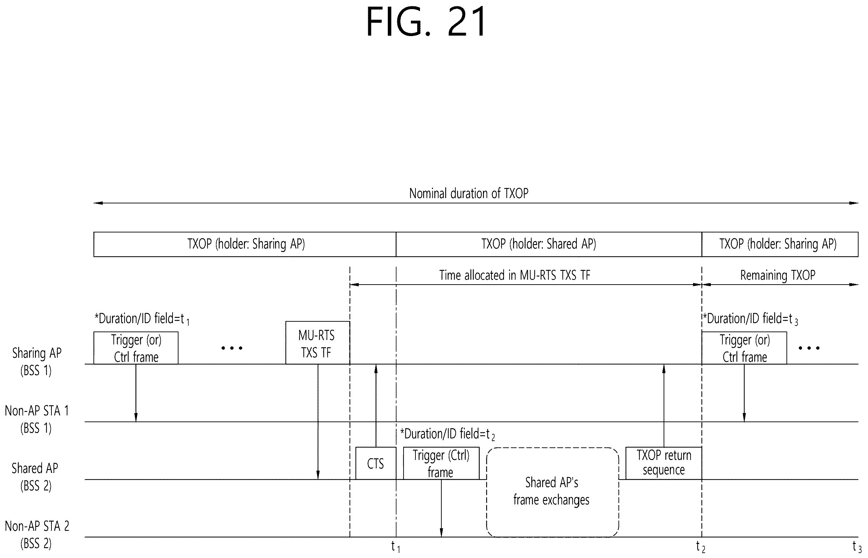

FIG. 21 illustrates an example of a procedure for TXOP sharing method 1 based on TXOP holder switching based on incremental TXOP hold.

FIG. 21 illustrates an example of a TXOP sharing method 1 procedure for gradually occupying a TXOP and switching the TXOP holder in C-TDMA. APs participating in C-TDMA compete for the medium to acquire a TXOP corresponding to a nominal duration. The nominal duration at this time can be regarded as the TXOP duration for general multiple frame exchange sequences required/expected for TXOP sharing between APs participating in C-TDMA and for individual FEs, which is less than or equal to the TXOP limit. An AP that acquires a TXOP and acts as an SAP does not include the TXOP duration corresponding to the nominal duration that actually includes the entire expected C-TDMA operation in the duration/ID field, but transmits a Trigger or Ctrl frame that includes the time required for FE with STAs in its BSS (i.e., t₁) in the duration/ID field, thereby acquiring and protecting the TXOP only for that period. In other words, the TXOP holder from the time of acquiring the TXOP to time t₁ is SAP, and during this period, the SAP can perform individual FEs as required. After completing FEs with STAs within its BSS, the SAP can then transmit an MU-RTS TXS TF within time t₁ for TXOP sharing with the DAP and receive a CTS frame in response.

An SAP that successfully receives a CTS frame from a DAP can complete the TXOP scheduled for time t1, and the DAP that transmitted the CTS frame to the SAP can perform an individual FE during the time allocated by the SAP (i.e., Allocation duration in the User Info field of the MU-RTS TXS TF) starting from the time of reception of the MU-RTS TXS TF. In addition, the start time of the allocated time can be newly defined so that the time allocated by the SAP starts immediately after the DAP transmits the CTS frame. At this time, a rule can be defined that the DAP that has been allocated time from the SAP through the MU-RTS TXS TF responds to the reception of the MU-RTS TXS TF with a CTS frame and can start transmitting frames after a SIFS (Short Inter Frame Space) or PIFS (PCF (Point Coordination Function) IFS). Through this, the TXOP holder is switched to the DAP immediately after the TXOP sharing process. A DAP that has completed an individual FE during the shared allocated time can perform a TXOP return through the TXOP return sequence or terminate the shared TXOP without performing a TXOP return.

In the TXOP sharing procedure of C-TDMA according to the present disclosure, the nominal TXOP duration assumed by SAP follows the TXOP limit (or maximum TXOP duration) defined in the standard, and the existing TXOP duration can be considered to be divided into multiple (split) TXOP durations for TXOP sharing of C-TDMA and operated sequentially.

### Option 1-2) TXOP sharing method 2 using incremental TXOP hold

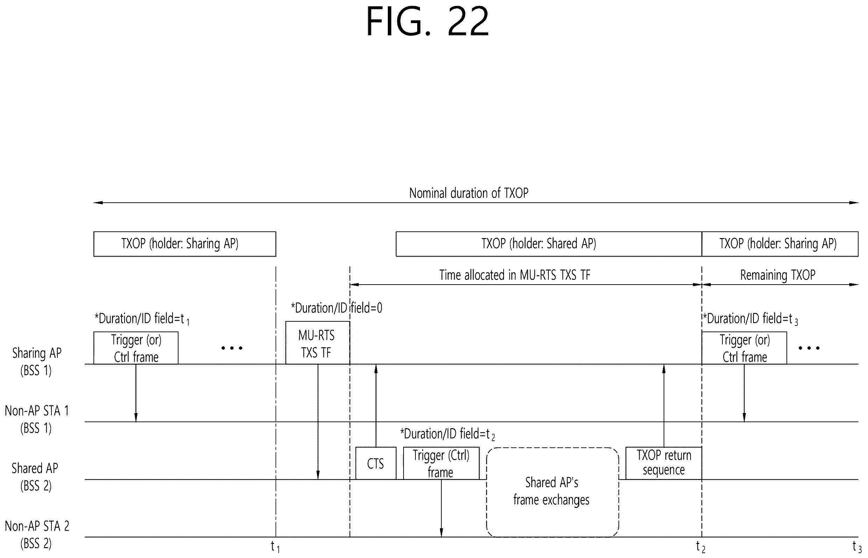

FIG. 22 illustrates an example of a procedure for TXOP sharing method 2 based on TXOP holder switching based on incremental TXOP hold.

FIG. 22 shows an example of a TXOP sharing method 2 procedure for gradually occupying a TXOP in C-TDMA and switching the TXOP holder. The Option 1-2) method differs from the Option 1-1) method only in that the process of transmitting the MU-RTS TXS TF for TXOP sharing to the DAP and receiving the CTS frame (exchange sequence) is not performed within the TXOP interval acquired by the SAP. This difference is to follow the existing baseline rule (setting the duration/ID field of the frame within the TXOP interval) through the Option 1-2) method, and the SAP individually transmits the MU-RTS TXS TF with the duration/ID field set to 0 immediately after performing an individual FE and terminating the TXOP (after SIFS or PIFS). That is, a SAP that has completed FE with STAs within its BSS can transmit an MU-RTS TXS TF after time t₁ for TXOP sharing with a DAP and receive a CTS frame for it. To this end, a rule can be defined that the SAP can terminate the TXOP and transmit an MU-RTS TXS TF with a duration/ID field value of 0 after SIFS/PIFS. In addition, a rule can be defined that a DAP that has been allocated time from a SAP through an MU-RTS TXS TF can respond to the reception of an MU-RTS TXS TF with a CTS frame and start frame transmission after SIFS or PIFS. Through this, the TXOP holder is switched to a DAP immediately after the TXOP sharing process. A DAP that has completed an individual FE during the shared allocated time can perform a TXOP return through the TXOP return sequence or can terminate the shared TXOP without performing a TXOP return.

In the TXOP sharing procedure of C-TDMA according to the present disclosure, the nominal TXOP duration assumed by the SAP follows the TXOP limit (or maximum TXOP duration) defined in the standard, and the existing TXOP duration can be considered to be divided into several (split) TXOP durations for TXOP sharing of C-TDMA and operated sequentially, and FE can be performed at SIFS or PIFS intervals between some (split) TXOP durations.

### Option 2-1) TXOP sharing method using truncation of TXOP 1 Procedure

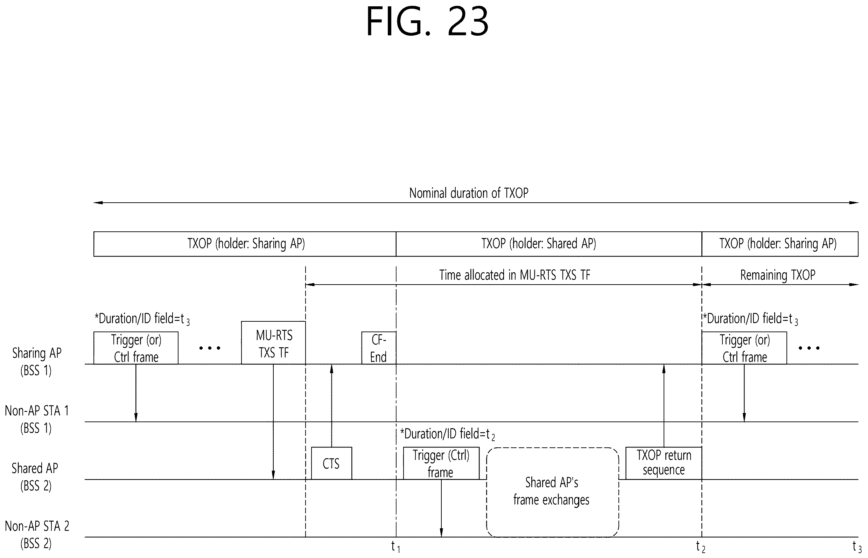

FIG. 23 illustrates an example of a procedure for TXOP sharing method 1 based on TXOP truncation.

FIG. 23 shows an example of a procedure for the TXOP sharing method 1 of C-TDMA, which suspends the TXOP and switches the TXOP holder. APs participating in C-TDMA perform medium contention to acquire a TXOP corresponding to the nominal duration. The nominal duration at this time can be regarded as the TXOP duration for TXOP sharing between APs participating in C-TDMA and general multiple frame exchange sequences required/expected for individual FEs, which is less than or equal to the TXOP limit. An AP that acquires a TXOP and acts as an SAP can protect the corresponding period by transmitting a Trigger or Ctrl (Control) frame that includes the time required for FE with STAs in its BSS (i.e., t₁), the TXOP to be shared with the DAP (i.e., t₂), and the time when the remaining TXOP ends (i.e., t₃) in the duration/ID field. That is, a value corresponding to the entire nominal duration is set in the duration/ID field. The SAP is the TXOP holder from the time it acquires the TXOP to time t₁ and can perform FE with STAs within the BSS. The SAP that has completed FE with STAs within its own BSS can transmit an MU-RTS TXS TF to the corresponding DAP within time t1 for TXOP sharing with the DAP and receive a CTS frame in response. Subsequently, the SAP that has received the CTS frame transmitted from the DAP can transmit a CF-End frame to cause the STAs within the range to reset the NAV set by itself. At this time, if the SAP shares the TXOP immediately without performing individual FE with STAs within its BSS immediately after winning the medium contention, the transmission of the CF-End frame presented above may not be necessary.

A rule can be added that causes a DAP that responds to an MU-RTS TXS TF directed to it with a CTS frame to execute the allocated time from the SAP when it subsequently receives/detects a forwarded CF-End frame. For example, a DAP may receive an MU-RTS TXS TF directed to it with a valid Allocation duration value and transmit a CTS frame in response to it, and then an AP participating in C-TDMA that receives/detects a CF-End frame with the same BSS color or BSSID as the MU-RTS TXS TF can transmit the frame after SIFS or PIFS. For example, a DAP may receive an MU-RTS TXS TF directed to it with a valid Allocation duration value and transmit a CTS frame in response thereto, and then an AP participating in C-TDMA that receives/detects a CF-End frame having a Receiver Address (RA) that is the same as the Transmitter Address (TA) of the MU-RTS TXS TF may transmit the frame after SIFS or PIFS.

That is, a rule can be defined that allows a DAP that has responded to an MU-RTS TXS TF directed to itself with a CTS frame to transmit a frame during the time allocated from the SAP when it subsequently receives/detects a transmitted CF-End frame.

A DAP can perform individual FEs from the time it receives a CF-End frame with the same BSS color, BSSID, or RA as the SAP until the time allocated by the SAP (i.e., Allocation duration in the User Info field of the MU-RTS TXS TF). In addition, the start time of the allocated time can be redefined so that the time allocated by the SAP starts immediately after the DAP transmits a CTS frame or immediately after it receives a CF-End frame from the SAP. This transitions the TXOP holder to the DAP. A DAP that completes an individual FE during the shared allocated time can either perform a TXOP return through the TXOP return sequence or terminate the shared TXOP without performing a TXOP return.

In the TXOP sharing procedure of C-TDMA according to the present disclosure, the nominal TXOP duration assumed by SAP follows the TXOP limit (or maximum TXOP duration) defined in the standard, and the existing TXOP duration can be considered to be divided into multiple (split) TXOP durations for TXOP sharing of C-TDMA and operated sequentially.

### Option 2-2) TXOP sharing method 2 through truncation of TXOP Procedure

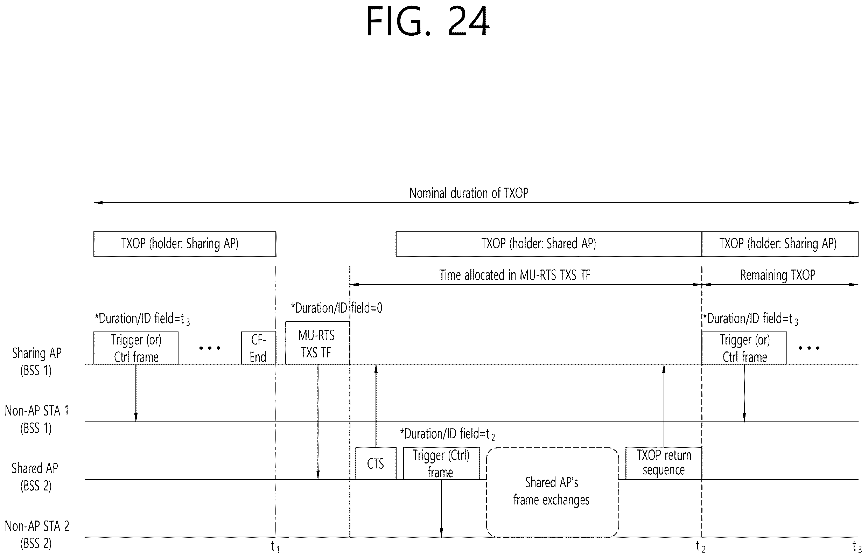

FIG. 24 illustrates an example of a procedure for TXOP sharing method 2 based on TXOP truncation.

FIG. 24 shows an example of the TXOP sharing method 2 procedure of C-TDMA that stops TXOP and switches TXOP holder. Option 2-2) method differs from Option 2-1) method only in that the process of transmitting MU-RTS TXS TF and receiving CTS frame for TXOP sharing to DAP (exchange sequence) is not performed within the TXOP interval acquired by SAP. This difference is to follow the existing baseline rule (setting the duration/ID field of the frame within the TXOP interval) through Option 2-2), and SAP individually transmits MU-RTS TXS TF with the duration/ID field set to 0 immediately after performing individual FE and terminating TXOP by transmitting CF-End frame (after SIFS or PIFS). That is, a SAP that has completed FE with STAs within its BSS can then transmit a CF-End frame for TXOP sharing with a DAP, terminate the TXOP, and immediately transmit an MU-RTS TXS TF and receive a CTS frame for it. To this end, a rule can be defined that the SAP can terminate the TXOP and transmit an MU-RTS TXS TF with a duration/ID field value of 0 after SIFS/PIFS. Additionally, a rule can be defined that a frame with a duration/ID field value of 0 (e.g., MU-RTS TXS TF) can be transmitted after transmitting the CF-End frame. In addition, a rule can be defined that a DAP that has been allocated time from a SAP through an MU-RTS TXS TF can respond to the reception of an MU-RTS TXS TF with a CTS frame and start transmitting frames after SIFS or PIFS. Through this, the TXOP holder is switched to a DAP immediately after the TXOP sharing process. A DAP that has completed an individual FE during the shared allocated time can perform a TXOP return through the TXOP return sequence or terminate the shared TXOP without performing a TXOP return.

In the TXOP sharing procedure of C-TDMA according to the present disclosure, the nominal TXOP duration assumed by SAP follows the TXOP limit (or maximum TXOP duration) defined in the standard, and the existing TXOP duration is divided into several (splitted) TXOP durations for TXOP sharing of C-TDMA and operated sequentially, and it can be considered that FE can be performed at SIFS or PIFS intervals between some (splitted) TXOP durations.

### 3) DAP's TXOP Holder Return Procedure

The DAP, through the TXOP sharing procedure proposed in Section 2), becomes the TXOP holder and can perform individual FEs during the time allocated by the SAP (i.e., the Allocation duration in the User Info field of the MU-RTS TXS TF). Specifically, the t₂ value is determined by the period corresponding to the Allocation duration value in the MU-RTS TXS TF transmitted from the SAP, and the DAP acquires a TXOP for that period. If the DAP completes the FE exactly within the allocated time (i.e., t₂), the SAP may not be able to utilize the remaining TXOP due to equal media competition with all other STAs. Similarly, if the DAP completes the FE earlier than the allocated time, the SAP must compete for the channel on an equal basis with other STAs.

In the existing EHT TXOP sharing, a SAP shares a TXOP with a non-AP STA within the entire TXOP period it acquired and receives it back. However, the method proposed in this section differs in that the TXOP holder changes, so a new method for returning the TXOP used by the DAP needs to be defined. That is, a method can be implemented to support the SAP to become the TXOP holder again when the time allocated to the DAP ends within the initially expected and assumed nominal duration. To this end, a DAP that has completed FE during the allocated time can transmit a frame notifying that its TXOP is ending, and the SAP can receive/detect this frame and return the TXOP holder while transmitting the frame faster than other STAs after SIFS or PIFS.

At this time, the TXOP holder return method can be defined and operated as follows depending on the frame transmitted from the DAP.

### Option 1) TXOP holder return method using the CF-End frame

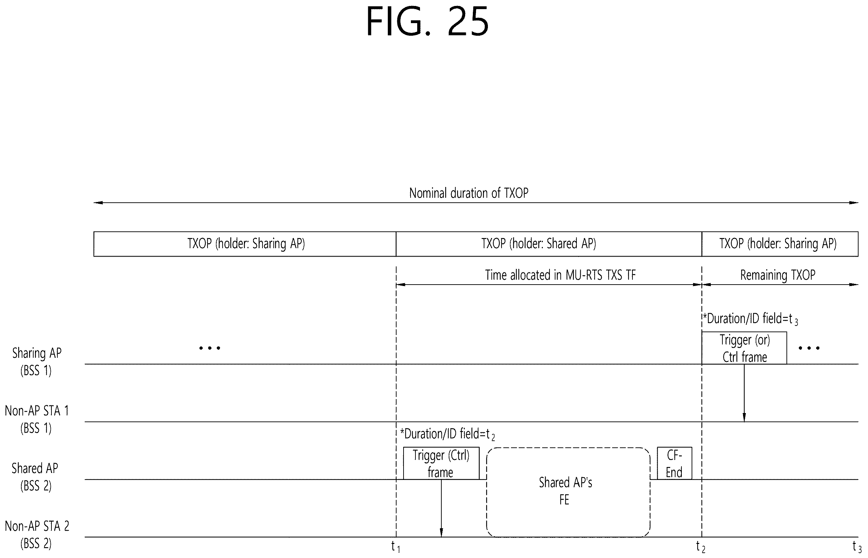

FIG. 25 illustrates an example of a TXOP holder return procedure using a CF-End frame.

Referring to Fig. 25, Option 1) assumes that the DAP transmits a CF-End frame when the FE is completed. Since all surrounding STAs receiving the CF-End frame can equally initiate the backoff procedure, it is necessary to grant the SAP the priority of TXOP holder return. To this end, a rule can be added that allows the SAP, which receives/detects the CF-End frame indicating the completion of the DAP's TXOP, to transmit a trigger frame (or Ctrl frame, or MU-RTS TXS TF) after SIFS or PIFS, so that the SAP can immediately acquire the remaining TXOP.

If one or more of the following conditions are satisfied in combination, a rule may be applied that allows an AP participating in C-TDMA that has received/detected a CF-End frame to transmit the frame after SIFS or PIFS.
i) When a CF-End frame with the BSSID or BSS color of the corresponding DAP is detected within the time allocated to the DAP (i.e., Allocation duration).
ii) When a CF-End frame with the same BSSID or BSS color as the AP with which the TXOP was most recently shared is detected within the Nominal duration.

Subsequently, additional TXOP sharing may occur with individual FEs of the SAP or with other DAPs during the remaining TXOP period.

### Option 2) TXOP holder return method using MU-RTS TXS TF & CTS exchange.

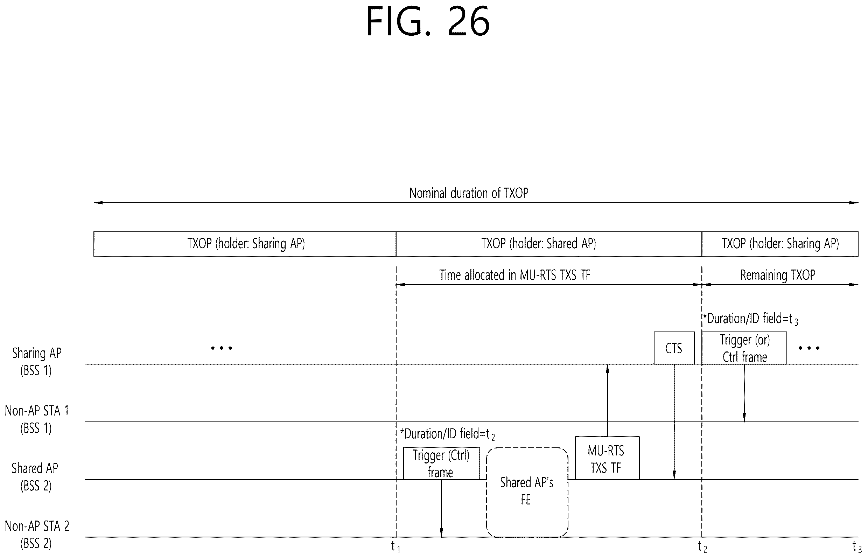

FIG. 26 illustrates an example of a TXOP holder return procedure using MU-RTS TXS TF and CTS exchange.

Referring to FIG. 26, Option 2) assumes that the DAP exchanges MU-RTS TXS TF and CTS frames with the SAP when the DAP completes the FE within the allocated time. The DAP can transmit an MU-RTS TXS TF containing SAP information (e.g., SAP's AID or a new AID defined for Multi-AP cooperation) in the User Info field to indicate that the scheduled FE is completed and the TXOP will soon end. The MU-RTS TXS TF at this time can be defined and indicated with a new mode (i.e., 3), and the unused Allocation duration field in the User Info field can be utilized as reserved. Additionally or alternatively, the Reserved field/bit of the Common Info field or the User Info field can be utilized to indicate the TXOP return without defining a new TXS mode. Upon receiving this, the SAP responds with a CTS frame and transmits a trigger frame (or Ctrl frame, or MU-RTS TXS TF) after SIFS or PIFS, and can immediately acquire the Remaining TXOP. That is, Option 2) is a method in which the SAP returns the TXOP holder through the same procedure as the TXOP holder transition method presented in section 2) in which the SAP performs TXOP sharing to the DAP. If the corresponding CTS frame is not received until the CTS timeout expires, the DAP transmits a CF-End frame to terminate the allocated TXOP. Subsequently, additional TXOP sharing to individual FEs of the SAP or to other DAPs may occur in the Remaining TXOP section.

This specification proposes a method for TXOP sharing in a multi-AP environment where APs operate in C-TDMA, whereby an entity (i.e., SAP) that has acquired a TXOP and becomes a TXOP holder hands over the TXOP holder to an entity (i.e., DAP) that is sharing the TXOP. Specifically, we define and propose a method for performing TXOP sharing by gradually handing over the TXOP holder over a TXOP duration that can be divided into multiple parts within the nominal TXOP duration, or by truncating the TXOP and returning and retaking the TXOP holder. The proposed TXOP sharing method in C-TDMA has the advantage of resolving protection issues that may occur in non-AP STAs connected to a DAP.

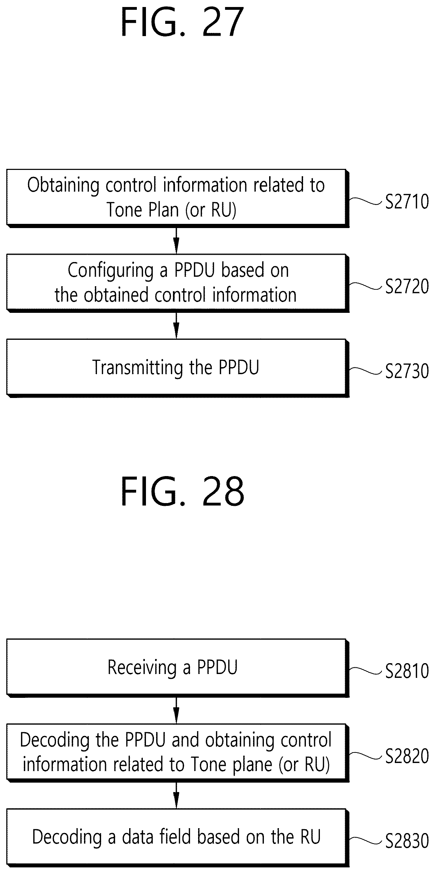

FIG. 27 is a flowchart illustrating the operation of a transmitting device according to the present embodiment.

The example of FIG. 27 may be performed by a transmitting device (AP and/or non-AP STA).

Some of each step (or detailed sub-step to be described later) of the example of FIG. 27 may be skipped/omitted.

Through step S2710, the transmitting device (transmitting STA) may obtain information about the above-described tone plan. As described above, the information about the tone plan includes the size and location of the RU, control information related to the RU, information about a frequency band including the RU, information about an STA receiving the RU, and the like.

Through step S2720, the transmitting device may construct/generate a PPDU based on the acquired control information. Configuring/generating the PPDU may include configuring/generating each field of the PPDU. That is, step S2720 includes configuring the EHT-SIG field including control information about the tone plan. That is, step S2720 includes configuring a field including control information (e.g., N bitmap) indicating the size/position of the RU; and/or configuring a field including an identifier of an STA receiving the RU (e.g., AID).

Also, step S2720 may include generating an STF/LTF sequence transmitted through a specific RU. The STF/LTF sequence may be generated based on a preset STF generation sequence/LTF generation sequence.

Also, step S2720 may include generating a data field (i.e., MPDU) transmitted through a specific RU.

The transmitting device may transmit the PPDU constructed through step S2720 to the receiving device based on step S2730.

While performing step S2730, the transmitting device may perform at least one of operations such as CSD, Spatial Mapping, IDFT/IFFT operation, and GI insertion.

A signal/field/sequence constructed according to the present specification may be transmitted in the form of FIG. 5.

FIG. 28 is a flowchart illustrating the operation of a receiving device according to the present embodiment.

The aforementioned PPDU may be received according to the example of FIG. 28.

The example of FIG. 28 may be performed by a receiving apparatus/device (AP and/or non-AP STA).

Some of each step (or detailed sub-step to be described later) of the example of FIG. 28 may be skipped/omitted.

The receiving device (receiving STA) may receive all or part of the PPDU through step S2810. The received signal may be in the form of FIG. 5.

A sub-step of step S2810 may be determined based on step S2730 of FIG. 27. That is, in step S2810, an operation of restoring the result of the CSD, Spatial Mapping, IDFT/IFFT operation, and GI insertion operation applied in step S2730 may be performed.

In step S2820, the receiving device may perform decoding on all/part of the PPDU. Also, the receiving device may obtain control information related to a tone plan (i.e., RU) from the decoded PPDU.

More specifically, the receiving device may decode the L-SIG and EHT-SIG of the PPDU based on the legacy STF/LTF and obtain information included in the L-SIG and EHT SIG fields. Information on various tone plans (i.e., RUs) described in this specification may be included in the EHT-SIG, and the receiving STA may obtain information on the tone plan (i.e., RU) through the EHT-SIG.

In step S2830, the receiving device may decode the remaining part of the PPDU based on information about the tone plan (i.e., RU) acquired through step S2820. For example, the receiving STA may decode the STF/LTF field of the PPDU based on information about one plan (i.e., RU). In addition, the receiving STA may decode the data field of the PPDU based on information about the tone plan (i.e., RU) and obtain the MPDU included in the data field.

In addition, the receiving device may perform a processing operation of transferring the data decoded through step S2830 to a higher layer (e.g., MAC layer). In addition, when generation of a signal is instructed from the upper layer to the PHY layer in response to data transmitted to the upper layer, a subsequent operation may be performed.

Hereinafter, the above-described embodiment will be described with reference to FIG. 1 to FIG. 28.

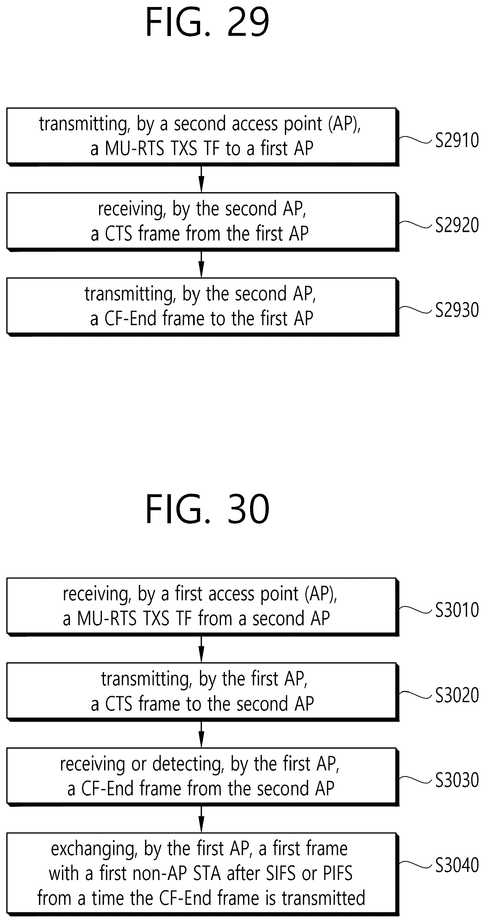

FIG. 29 is a flowchart illustrating a procedure for a TXOP sharing method using TXOP truncation on the Sharing AP side according to the present embodiment.

The example of FIG. 29 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

An example of FIG. 29 may be performed in a second AP, the second AP may be set as a sharing AP (SAP) after negotiation in multi-AP communication, and the first AP may be set as a shared AP (DAP) after negotiation in multi-AP communication. First and second non-AP STAs of the present embodiment may correspond to at least one station (STA).

The present embodiment proposes a method for performing TXOP sharing by switching the TXOP holder when performing C-TDMA operation in multi-access point (multi-AP) communication (or multi-AP operation). In particular, the present embodiment proposes a method for performing frame exchange with the DAP without being affected by the NAV of the SAP by switching the TXOP holder from the SAP to the DAP through the CF-End frame. In addition, the present embodiment also proposes a method for utilizing the remaining TXOP by switching the TXOP holder from the DAP back to the SAP through the TXOP return sequence.

In step S2910, a second access point (AP) transmits a Multi User-Request to Send (MU-RTS) transmission opportunity (TXOP) sharing (TXS) trigger frame to a first AP.

In step S2920, the second AP receives a Clear to Send (CTS) frame from the first AP.

In step S2930, the second AP transmits a Contention Free (CF)-End frame to the first AP.

A first frame is exchanged between the first AP and a first non-AP station (STA) after SIFS (Short Inter Frame Space) or PIFS (PCF (Point Coordination Function) IFS) from a time the CF-End frame is transmitted.

At this time, the second AP is a Sharing AP that controls cooperation between multiple APs, and the first AP is a Shared AP that receives resources allocated or shared from the Sharing AP. The first non-AP STA is a non-AP STA within a Basic Service Set (BSS) of the first AP.

The technique for cooperation between the multiple APs may include a coordinated multi-AP technique such as Coordinated-Time Division Multiplexing Access (C-TDMA), Coordinated-Spatial Reuse (C-SR), Coordinated-beamforming (C-BF), or Coordinated-Orthogonal Frequency Division Multiple Access (C-OFMA).

In an example of C-TDMA operation, the entity sharing the TXOP (SAP, here the second AP) and the entity receiving the TXOP (DAP, here the first AP) are APs with different BSSs. That is, because frame transmission within the BSS of the SAP may cause non-AP STAs within the BSS of the DAP to set the basic NAV and not be able to exchange frames smoothly with the DAP, protection rules related to Network Allocation Vector (NAV) settings must be precisely applied to ensure smooth cooperation between APs and frame exchange within each BSS. In particular, non-AP STAs connected to the DAP can receive/detect frames transmitted from the SAP or non-AP STAs connected to the SAP and CTS frames transmitted from the DAP and set the basic NAV for the SAP. At this time, a problem may occur in which non-AP STAs connected to the DAP cannot transmit UL PPDUs or frames to the DAP due to the basic NAV.

This embodiment proposes a TXOP sharing method in a multi-AP cooperative environment, in which a TXOP holder is switched from a SAP to a DAP or back to a SAP and performs a C-TDMA procedure. Through the C-TDMA operation procedure proposed in this embodiment, a DAP and some non-AP STAs within the BSS of the DAP can exchange frames with the DAP without being affected by the NAV of the SAP. For example, when the associated non-AP STAs of the DAP receive a trigger frame to which a resource unit (RU) that enables transmission of a PPDU or frame is allocated from the DAP, the non-AP STAs can transmit the PPDU or frame without being affected by the NAV.

That is, the present embodiment has the effect of enabling non-AP STAs connected to a DAP to smoothly exchange frames with the DAP without setting a default NAV by the SAP by terminating some TXOPs and switching a TXOP holder according to a protected C-TDMA-based TXOP sharing method. This has the effect of enabling appropriate scheduling based on cooperation between multiple APs, and an expected increase in overall network throughput.

Below, this embodiment specifically describes a TXOP sharing method through truncation of TXOP.

A first TXOP may be switched to a second TXOP starting from transmission of the CF-End frame. The first TXOP may be a TXOP acquired by the second AP, and the second TXOP may be a TXOP acquired by the first AP. The first TXOP may end at a first time when the CF-End frame is transmitted. That is, the CF-End frame may explicitly indicate end of the non-contention period and completion of a current TXOP.

At this time, the second AP may exchange a second frame with a second non-AP STA until the first time. The second non-AP STA may be a non-AP STA within the BSS of the second AP. The second frame may include a second trigger frame or a second control frame. A Duration or ID field of the second trigger frame or the second control frame may include information on a third time. The third time may correspond to a nominal duration of the TXOP, and the present embodiment proposes a method of obtaining a TXOP truncated by the CF-End frame and a TXOP return sequence described below from an entire TXOP.

The CF-End frame may include the same BSS color, BSS Identifier (BSSID) or Receiver Address (RA) as the MU-RTS TXS trigger frame.

Additionally, the first AP may transmit a TXOP return sequence to the second AP after the exchange of the first frame is completed. The second TXOP may end at a second time at which the TXOP return sequence is transmitted. The second time may be determined based on a value of an Allocation Duration subfield of a User Info field of the MU-RTS TXS trigger frame.

The first frame may include a first trigger frame or a first control frame. A Duration or ID field of the first trigger frame or the first control frame may include information on the second time.

That is, the present embodiment can define a rule so that a DAP that receives or detects the CF-End frame having the same BSS color, BSSID, or RA as the MU-RTS TXS trigger frame may transmit a frame after an SIFS or PIFS from a time the CF-End frame is transmitted. In particular, the DAP may perform individual frame exchange with a non-AP STA connected to the DAP from the time of receiving the CTS frame to the time allocated through the MU-RTS TXS trigger frame (here, the second time).

Additionally, this embodiment describes a procedure for returning a TXOP holder of a DAP back to SAP.

The second AP may receive the TXOP return sequence and may transmit a third frame to the second non-AP STA after SIFS or PIFS. The second TXOP may be switched to a third TXOP starting from transmission of the third frame. The third TXOP may be a remaining TXOP that the second AP acquires again. The third time may be a time at which the third TXOP ends or a time at which an entire TXOP for the cooperation between the multiple APs ends.

FIG. 30 is a flowchart illustrating a procedure for a TXOP sharing method using TXOP truncation on the Shared AP side according to the present embodiment.

The example of FIG. 30 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

An example of FIG. 30 may be performed in a first AP, the first AP may be set as a shared AP (DAP) after negotiation in multi-AP communication, and the second AP may be set as a sharing AP (SAP) after negotiation in the multi-AP communication. First and second non-AP STAs of the present embodiment may correspond to at least one station (STA).

The present embodiment proposes a method for performing TXOP sharing by switching the TXOP holder when performing C-TDMA operation in multi-access point (multi-AP) communication (or multi-AP operation). In particular, the present embodiment proposes a method for performing frame exchange with the DAP without being affected by the NAV of the SAP by switching the TXOP holder from the SAP to the DAP through the CF-End frame. In addition, the present embodiment also proposes a method for utilizing the remaining TXOP by switching the TXOP holder from the DAP back to the SAP through the TXOP return sequence.

In step S3010, a first access point (AP) receives a Multi User-Request to Send (MU-RTS) transmission opportunity (TXOP) sharing (TXS) trigger frame from a second AP.

In step S3020, the first AP transmits a Clear to Send (CTS) frame to the second AP.

In step S3030, the first AP receives or detects a Contention Free (CF)-End frame from the second AP.

In step S3040, the first AP exchanges a first frame with a first non-AP station (STA) after SIFS (Short Inter Frame Space) or PIFS (PCF (Point Coordination Function) IFS) from a time the CF-End frame is transmitted.

At this time, the second AP is a Sharing AP that controls cooperation between multiple APs, and the first AP is a Shared AP that receives resources allocated or shared from the Sharing AP. The first non-AP STA is a non-AP STA within a Basic Service Set (BSS) of the first AP.

The technique for cooperation between the multiple APs may include a coordinated multi-AP technique such as Coordinated-Time Division Multiplexing Access (C-TDMA), Coordinated-Spatial Reuse (C-SR), Coordinated-beamforming (C-BF), or Coordinated-Orthogonal Frequency Division Multiple Access (C-OFMA).

In an example of C-TDMA operation, the entity sharing the TXOP (SAP, here the second AP) and the entity receiving the TXOP (DAP, here the first AP) are APs with different BSSs. That is, because frame transmission within the BSS of the SAP may cause non-AP STAs within the BSS of the DAP to set the basic NAV and not be able to exchange frames smoothly with the DAP, protection rules related to Network Allocation Vector (NAV) settings must be precisely applied to ensure smooth cooperation between APs and frame exchange within each BSS. In particular, non-AP STAs connected to the DAP can receive/detect frames transmitted from the SAP or non-AP STAs connected to the SAP and CTS frames transmitted from the DAP and set the basic NAV for the SAP. At this time, a problem may occur in which non-AP STAs connected to the DAP cannot transmit UL PPDUs or frames to the DAP due to the basic NAV.

This embodiment proposes a TXOP sharing method in a multi-AP cooperative environment, in which a TXOP holder is switched from a SAP to a DAP or back to a SAP and performs a C-TDMA procedure. Through the C-TDMA operation procedure proposed in this embodiment, a DAP and some non-AP STAs within the BSS of the DAP can exchange frames with the DAP without being affected by the NAV of the SAP. For example, when the associated non-AP STAs of the DAP receive a trigger frame to which a resource unit (RU) that enables transmission of a PPDU or frame is allocated from the DAP, the non-AP STAs can transmit the PPDU or frame without being affected by the NAV.

That is, the present embodiment has the effect of enabling non-AP STAs connected to a DAP to smoothly exchange frames with the DAP without setting a default NAV by the SAP by terminating some TXOPs and switching a TXOP holder according to a protected C-TDMA-based TXOP sharing method. This has the effect of enabling appropriate scheduling based on cooperation between multiple APs, and an expected increase in overall network throughput.

Below, this embodiment specifically describes a TXOP sharing method through truncation of TXOP.

A first TXOP may be switched to a second TXOP starting from transmission of the CF-End frame. The first TXOP may be a TXOP acquired by the second AP, and the second TXOP may be a TXOP acquired by the first AP. The first TXOP may end at a first time when the CF-End frame is transmitted. That is, the CF-End frame may explicitly indicate end of the non-contention period and completion of a current TXOP.

At this time, the second AP may exchange a second frame with a second non-AP STA until the first time. The second non-AP STA may be a non-AP STA within the BSS of the second AP. The second frame may include a second trigger frame or a second control frame. A Duration or ID field of the second trigger frame or the second control frame may include information on a third time. The third time may correspond to a nominal duration of the TXOP, and the present embodiment proposes a method of obtaining a TXOP truncated by the CF-End frame and a TXOP return sequence described below from an entire TXOP.

The CF-End frame may include the same BSS color, BSS Identifier (BSSID) or Receiver Address (RA) as the MU-RTS TXS trigger frame.

Additionally, the first AP may transmit a TXOP return sequence to the second AP after the exchange of the first frame is completed. The second TXOP may end at a second time at which the TXOP return sequence is transmitted. The second time may be determined based on a value of an Allocation Duration subfield of a User Info field of the MU-RTS TXS trigger frame.

The first frame may include a first trigger frame or a first control frame. A Duration or ID field of the first trigger frame or the first control frame may include information on the second time.

That is, the present embodiment can define a rule so that a DAP that receives or detects the CF-End frame having the same BSS color, BSSID, or RA as the MU-RTS TXS trigger frame may transmit a frame after an SIFS or PIFS from a time the CF-End frame is transmitted. In particular, the DAP may perform individual frame exchange with a non-AP STA connected to the DAP from the time of receiving the CTS frame to the time allocated through the MU-RTS TXS trigger frame (here, the second time).

Additionally, this embodiment describes a procedure for returning a TXOP holder of a DAP back to SAP.

The second AP may receive the TXOP return sequence and may transmit a third frame to the second non-AP STA after SIFS or PIFS. The second TXOP may be switched to a third TXOP starting from transmission of the third frame. The third TXOP may be a remaining TXOP that the second AP acquires again. The third time may be a time at which the third TXOP ends or a time at which an entire TXOP for the cooperation between the multiple APs ends.

### < Device configuration>

The technical features of the present disclosure may be applied to various devices and methods. For example, the technical features of the present disclosure may be performed/supported through the device(s) of FIG. 1 and/or FIG. 13. For example, the technical features of the present disclosure may be applied to only part of FIG. 1 and/or FIG. 13. For example, the technical features of the present disclosure may be implemented based on the processing chip(s) 114 and 124 of FIG. 1, or implemented based on the processor(s) 111 and 121 and the memory(s) 112 and 122, or implemented based on the processor 610 and the memory 620 of FIG. 13. For example, the device according to the present disclosure receives a Multi User-Request to Send (MU-RTS) transmission opportunity (TXOP) sharing (TXS) trigger frame from a second access point (AP); transmits a Clear to Send (CTS) frame to the second AP; receives or detects a Contention Free (CF)-End frame from the second AP; and exchanges a first frame with a first non-AP station (STA) after SIFS (Short Inter Frame Space) or PIFS (PCF (Point Coordination Function) IFS) from a time the CF-End frame is transmitted.

The technical features of the present disclosure may be implemented based on a computer readable medium (CRM). For example, a CRM according to the present disclosure is at least one computer readable medium including instructions designed to be executed by at least one processor.

The CRM may store instructions that perform operations including receiving a Multi User-Request to Send (MU-RTS) transmission opportunity (TXOP) sharing (TXS) trigger frame from a second access point (AP); transmitting a Clear to Send (CTS) frame to the second AP; receiving or detecting a Contention Free (CF)-End frame from the second AP; and exchanging a first frame with a first non-AP station (STA) after SIFS (Short Inter Frame Space) or PIFS (PCF (Point Coordination Function) IFS) from a time the CF-End frame is transmitted. At least one processor may execute the instructions stored in the CRM according to the present disclosure. At least one processor related to the CRM of the present disclosure may be the processor 111, 121 of FIG. 1, the processing chip 114, 124 of FIG. 1, or the processor 610 of FIG. 13. Meanwhile, the CRM of the present disclosure may be the memory 112, 122 of FIG. 1, the memory 620 of FIG. 13, or a separate external memory/storage medium/disk.

The foregoing technical features of the present specification are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The claims recited in the present specification may be combined in a variety of ways. For example, the technical features of the method claims of the present specification may be combined to be implemented as a device, and the technical features of the device claims of the present specification may be combined to be implemented by a method. In addition, the technical characteristics of the method claim of the present specification and the technical characteristics of the device claim may be combined to be implemented as a device, and the technical characteristics of the method claim of the present specification and the technical characteristics of the device claim may be combined to be implemented by a method.

## Claims

1. A method in a wireless local area network (WLAN) system, the method comprising:
receiving, by a first access point (AP), a Multi User-Request to Send (MU-RTS) transmission opportunity (TXOP) sharing (TXS) trigger frame from a second AP;
transmitting, by the first AP, a Clear to Send (CTS) frame to the second AP;
receiving or detecting, by the first AP, a Contention Free (CF)-End frame from the second AP; and
exchanging, by the first AP, a first frame with a first non-AP station (STA) after SIFS (Short Inter Frame Space) or PIFS (PCF (Point Coordination Function) IFS) from a time the CF-End frame is transmitted,
wherein the second AP is a Sharing AP that controls cooperation between multiple APs,
wherein the first AP is a Shared AP that receives resources allocated or shared from the Sharing AP, and
wherein the first non-AP STA is a non-AP STA within a Basic Service Set (BSS) of the first AP.

2. The method of claim 1, wherein a first TXOP is switched to a second TXOP starting from transmission of the CF-End frame, and
wherein the first TXOP is a TXOP acquired by the second AP, and the second TXOP is a TXOP acquired by the first AP.

3. The method of claim 2, wherein the CF-End frame includes the same BSS color, BSS Identifier (BSSID) or Receiver Address (RA) as the MU-RTS TXS trigger frame,
wherein the first TXOP ends at a first time when the CF-End frame is transmitted,
wherein the second AP exchanges a second frame with a second non-AP STA until the first time, and
wherein the second non-AP STA is a non-AP STA within the BSS of the second AP.

4. The method of claim 3, further comprising:
transmitting, by the first AP, a TXOP return sequence to the second AP after the exchange of the first frame is completed,
wherein the second TXOP ends at a second time at which the TXOP return sequence is transmitted, and
wherein the second time is determined based on a value of an Allocation Duration subfield of a User Info field of the MU-RTS TXS trigger frame.

5. The method of claim 4, wherein the second AP receives the TXOP return sequence and transmits a third frame to the second non-AP STA after SIFS or PIFS,
wherein the second TXOP is switched to a third TXOP starting from transmission of the third frame, and
wherein the third TXOP is a remaining TXOP that the second AP acquires again.

6. The method of claim 5, wherein the first frame includes a first trigger frame or a first control frame,
wherein a Duration or ID field of the first trigger frame or the first control frame includes information on the second time,
wherein the second frame includes a second trigger frame or a second control frame,
wherein a Duration or ID field of the second trigger frame or the second control frame includes information on a third time,
wherein the third frame includes a third trigger frame or a third control frame,
wherein a Duration or ID field of the third trigger frame or the third control frame includes information on the third time, and
wherein the third time is a time at which the third TXOP ends or a time at which an entire TXOP for the cooperation between the multiple APs ends.

7. A first access point (AP) in a wireless local area network (WLAN) system, the first AP comprising:
a memory;
a transceiver; and
a processor being operatively connected to the memory and the transceiver,
wherein the processor is configured to:
receive a Multi User-Request to Send (MU-RTS) transmission opportunity (TXOP) sharing (TXS) trigger frame from a second AP;
transmit a Clear to Send (CTS) frame to the second AP;
receive or detect a Contention Free (CF)-End frame from the second AP; and
exchange a first frame with a first non-AP station (STA) after SIFS (Short Inter Frame Space) or PIFS (PCF (Point Coordination Function) IFS) from a time the CF-End frame is transmitted,
wherein the second AP is a Sharing AP that controls cooperation between multiple APs,
wherein the first AP is a Shared AP that receives resources allocated or shared from the Sharing AP, and
wherein the first non-AP STA is a non-AP STA within a Basic Service Set (BSS) of the first AP.

8. A method in a wireless local area network (WLAN) system, the method comprising:
transmitting, by a second access point (AP), a Multi User-Request to Send (MU-RTS) transmission opportunity (TXOP) sharing (TXS) trigger frame to a first AP;
receiving, by the second AP, a Clear to Send (CTS) frame from the first AP; and
transmitting, by the second AP, a Contention Free (CF)-End frame to the first AP,
wherein a first frame is exchanged between the first AP and a first non-AP station (STA) after SIFS (Short Inter Frame Space) or PIFS (PCF (Point Coordination Function) IFS) from a time the CF-End frame is transmitted,
wherein the second AP is a Sharing AP that controls cooperation between multiple APs,
wherein the first AP is a Shared AP that receives resources allocated or shared from the Sharing AP, and
wherein the first non-AP STA is a non-AP STA within a Basic Service Set (BSS) of the first AP.

9. The method of claim 8, wherein a first TXOP is switched to a second TXOP starting from transmission of the CF-End frame, and
wherein the first TXOP is a TXOP acquired by the second AP, and the second TXOP is a TXOP acquired by the first AP.

10. The method of claim 9, wherein the CF-End frame includes the same BSS color, BSS Identifier (BSSID) or Receiver Address (RA) as the MU-RTS TXS trigger frame,
wherein the first TXOP ends at a first time when the CF-End frame is transmitted,
wherein the second AP exchanges a second frame with a second non-AP STA until the first time, and
wherein the second non-AP STA is a non-AP STA within the BSS of the second AP.

11. The method of claim 10, further comprising:
receiving, by the second AP, a TXOP return sequence from the first AP after the exchange of the first frame is completed,
wherein the second TXOP ends at a second time at which the TXOP return sequence is transmitted, and
wherein the second time is determined based on a value of an Allocation Duration subfield of a User Info field of the MU-RTS TXS trigger frame.

12. The method of claim 11, wherein the second AP receives the TXOP return sequence and transmits a third frame to the second non-AP STA after SIFS or PIFS,
wherein the second TXOP is switched to a third TXOP starting from transmission of the third frame, and
wherein the third TXOP is a remaining TXOP that the second AP acquires again.

13. The method of claim 12, wherein the first frame includes a first trigger frame or a first control frame,
wherein a Duration or ID field of the first trigger frame or the first control frame includes information on the second time,
wherein the second frame includes a second trigger frame or a second control frame,
wherein a Duration or ID field of the second trigger frame or the second control frame includes information on a third time,
wherein the third frame includes a third trigger frame or a third control frame,
wherein a Duration or ID field of the third trigger frame or the third control frame includes information on the third time, and
wherein the third time is a time at which the third TXOP ends or a time at which an entire TXOP for the cooperation between the multiple APs ends.

14. A second access point (AP) in a wireless local area network (WLAN) system, the second AP comprising:
a memory;
a transceiver; and
a processor being operatively connected to the memory and the transceiver,
wherein the processor is configured to:
transmit a Multi User-Request to Send (MU-RTS) transmission opportunity (TXOP) sharing (TXS) trigger frame to a first AP;
receive a Clear to Send (CTS) frame from the first AP; and
transmit a Contention Free (CF)-End frame to the first AP,
wherein a first frame is exchanged between the first AP and the first non-AP station (STA) after SIFS (Short Inter Frame Space) or PIFS (PCF (Point Coordination Function) IFS) from a time the CF-End frame is transmitted,
wherein the second AP is a Sharing AP that controls cooperation between multiple APs,
wherein the first AP is a Shared AP that receives resources allocated or shared from the Sharing AP, and
wherein the first non-AP STA is a non-AP STA within a Basic Service Set (BSS) of the first AP.

15. A computer readable medium including an instruction being executed by at least one processor and performing a method comprising the steps of:
receiving a Multi User-Request to Send (MU-RTS) transmission opportunity (TXOP) sharing (TXS) trigger frame from a second access point (AP);
transmitting a Clear to Send (CTS) frame to the second AP;
receiving or detecting a Contention Free (CF)-End frame from the second AP; and
exchanging a first frame with a first non-AP station (STA) after SIFS (Short Inter Frame Space) or PIFS (PCF (Point Coordination Function) IFS) from a time the CF-End frame is transmitted,
wherein the second AP is a Sharing AP that controls cooperation between multiple APs,
wherein a first AP is a Shared AP that receives resources allocated or shared from the Sharing AP, and
wherein the first non-AP STA is a non-AP STA within a Basic Service Set (BSS) of the first AP.

16. A device in a wireless local area network (WLAN) system, the device comprising:
a memory; and
a processor being operatively connected to the memory,
wherein the processor is configured to:
receive a Multi User-Request to Send (MU-RTS) transmission opportunity (TXOP) sharing (TXS) trigger frame from a second access point (AP);
transmit a Clear to Send (CTS) frame to the second AP;
receive or detect a Contention Free (CF)-End frame from the second AP; and
exchange a first frame with a first non-AP station (STA) after SIFS (Short Inter Frame Space) or PIFS (PCF (Point Coordination Function) IFS) from a time the CF-End frame is transmitted,
wherein the second AP is a Sharing AP that controls cooperation between multiple APs,
wherein a first AP is a Shared AP that receives resources allocated or shared from the Sharing AP, and
wherein the first non-AP STA is a non-AP STA within a Basic Service Set (BSS) of the first AP.
